(19) **Europäisches Patentamt European Patent Office Office européen des brevets**

(11) **EP 4 601 231 A1**

(12) **EUROPEAN PATENT APPLICATION**
published in accordance with Art. 153(4) EPC

(43) Date of publication:
   **13.08.2025 Bulletin 2025/33**

(21) Application number: **23886161.1**

(22) Date of filing: **30.10.2023**

(51) International Patent Classification (IPC):
   **H04L 5/00** (2006.01)    **H04L 5/14** (2006.01)
   **H04W 72/23** (2023.01)

(52) Cooperative Patent Classification (CPC):
   **H04L 5/00; H04L 5/14; H04W 72/04; H04W 72/23**

(86) International application number:
   **PCT/KR2023/016957**

(87) International publication number:
   **WO 2024/096465 (10.05.2024 Gazette 2024/19)**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority: **31.10.2022 KR 20220142367**

(71) Applicant: **Samsung Electronics Co., Ltd.
   Suwon-si, Gyeonggi-do 16677 (KR)**

(72) Inventors:
   • **CHOI, Kyungjun
      Suwon-si, Gyeonggi-do 16677 (KR)**
   • **JANG, Youngrok
      Suwon-si, Gyeonggi-do 16677 (KR)**
   • **SHIM, Jaeyeon
      Suwon-si, Gyeonggi-do 16677 (KR)**
   • **JI, Hyoungju
      Suwon-si, Gyeonggi-do 16677 (KR)**
   • **CHOE, Hyemin
      Suwon-si, Gyeonggi-do 16677 (KR)**

(74) Representative: **Nederlandsch Octrooibureau
   P.O. Box 29720
   2502 LS The Hague (NL)**

(54) **METHOD AND DEVICE FOR TRANSMITTING/RECEIVING DATA CHANNEL FOR FULL-DUPLEX COMMUNICATION IN WIRELESS COMMUNICATION SYSTEM**

(57)    The present disclosure relates to a 5G or 6G communication system for supporting a higher data transfer rate. The present disclosure provides a method for downlink control channel configuration and reception in a wireless communication system.

FIG. 16

EP 4 601 231 A1

**Description**

[Technical Field]

The disclosure relates to operations of a terminal and base station in a wireless communication system. More particularly, the disclosure relates to a method and device for transmitting or receiving data channel by a terminal.

[Background Art]

5G mobile communication technologies define broad frequency bands such that high transmission rates and new services are possible, and can be implemented not only in "Sub 6 GHz" bands such as 3.50 GHz, but also in "Above 6 GHz" bands referred to as mmWave including 28 GHz and 39 GHz. In addition, it has been considered to implement 6G mobile communication technologies, which is referred to as Beyond 5G systems, in terahertz (THz) bands (for example, 95 GHz to 3 THz bands) in order to accomplish transmission rates fifty times faster than 5G mobile communication technologies and ultra-low latencies one-tenth of 5G mobile communication technologies

At the beginning of the development of 5G mobile communication technologies, in order to support services and to satisfy performance requirements in connection with enhanced Mobile BroadBand (eMBB), Ultra-Reliable Low-Latency Communications (URLLC), and massive Machine-Type Communications (m MTC), there has been ongoing standardization regarding beamforming and massive MIMO for mitigating radio-wave path loss and increasing radio-wave transmission distances in mmWave, supporting various numerologies (for example, operating a plurality of subcarrier spacings) for efficiently utilizing mmWave resources and dynamic operation of slot formats, initial access technologies for supporting multi-beam transmission and broadbands, definition and operation of Band-Width Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding locations and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, Mobile Edge Computing (MEC) for receiving services based on UE locations, and the like.

As such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, drone communication, and the like.

Furthermore, such development of 5G mobile communication systems will serve as a basis for developing not only new waveforms for providing coverage in terahertz hands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS) technology, but also full-duplex technology for increasing frequency efficiency of 6G mobile communication technologies and improving system networks, AI-based communication technology for implementing system optimization by utilizing satellites and Artificial Intelligence (AI) from the design stage and internalizing end-to-end AI support functions, and next-generation distributed computing technology for implementing services at levels of complexity exceeding the limit of UE operation capability by utilizing ultra-high-performance communication and computing resources.

As described above and with the development of wireless communication systems, various services have become available, and thus, methods for providing these services smoothly are required.

[Disclosure]

[Technical Problem]

The disclosure is to provide a device and method capable of effectively providing a service in a mobile communication system.

The technical objects to be achieved in the embodiments of the disclosure are not limited to the technical objects mentioned above, and other technical objects not mentioned will be clearly understood by those skilled in the art from the description below.

[Technical Solution]

In order to solve the above problems, in the disclosure, a method performed by a terminal in a wireless communication system that supports subband non-overlapping full duplex (SBFD), comprises: obtaining at least one uplink subband (UL subband) configuration information including time-and-frequency resource configuration information for configuring a part of a resource for downlink reception as a resource for uplink transmission and first information indicating an uplink subband to be activated among the at least one UL subband; receiving control information on downlink data reception in the activated uplink subband; and determining whether to receive downlink data in the activated uplink subband based on any one of the at least one UL subband configuration information, the first information, and the control information.

In order to solve the above problems, in the disclosure, a method performed by a base station in a wireless communication system that supports subband non-overlapping full duplex (SBFD), comprises: transmitting, to a terminal, at least one uplink subband (UL subband) configuration information including time-and-frequency resource configuration information for configuring a part of a resource for downlink reception as a resource for uplink transmission and first information indicating an uplink subband to be activated among the at least one UL subband; transmitting, to the terminal, control information on downlink data reception in the activated uplink subband; and transmitting downlink data in the activated uplink subband based on any one of the at least one UL subband configuration information, the first information, and the control information.

In order to solve the above problems, in the disclosure, a terminal in a wireless communication system that supports subband non-overlapping full duplex (SBFD), comprises a transceiver to transmit or receive a signal: and a controller, wherein the controller obtains at least one uplink subband (UL subband) configuration information including time-and-frequency resource configuration information for configuring a part of a resource for downlink reception as a resource for uplink transmission and first information indicating an uplink subband to be activated among the at least one UL subband, receives control information on downlink data reception in the activated uplink subband, and determines whether to receive downlink data in the activated uplink subband based on any one of the at least one UL subband configuration information, the first information, and the control information.

In order to solve the above problems, in the disclosure, a base station in a wireless communication system that supports subband non-overlapping full duplex (SBFD), comprises a transceiver to transmit or receive a signal: and a controller, wherein the controller transmits, to a terminal, at least one uplink subband (UL subband) configuration information including time-and-frequency resource configuration information for configuring a part of a resource for downlink reception as a resource for uplink transmission and first information indicating an uplink subband to be activated among the at least one UL subband, transmits, to the terminal, control information on downlink data reception in the activated uplink subband, and transmits downlink data in the activated uplink subband based on any one of the at least one UL subband configuration information, the first information, and the control information.

The disclosure proposes a downlink control channel reception method in subband non-overlapping full duplex (SBFD)

According to a SBFD operation, some resource blocks (RBs) of downlink symbols may be used for uplink transmission. Therefore, the terminal needs an operation to receive a physical downlink channel (PDCCH) that overlaps with some of the RBs. The disclosure proposes methods for solving the above problem.

According to an embodiment, a base station may configure a search space according to the SBFD operation for the terminal. For example, when configuring each search space, the terminal may configure a control resource set (CORESET) pair suitable for the search space. A first CORESET among the CORESET pairs may be applied to a downlink only symbol, and a second CORESET may be applied to an SBFD symbol. As another example, the terminal may be indicated with a bitmap indicating information on whether to monitor PDCCH for each period, in addition to a periodicity/offset of a slot unit, in the search space. Here, the length of the bitmap may be determined based on a time division multiplexing (TDD) periodicity, the number of PDCCH Monitoring occasions (MOs) within one frame (10 ms), or the number of PDCCH MOs within two frames (20 ms). As another example, the search space may include a 1-bit indicator. If the 1-bit is '0', the terminal may monitor the PDCCH MO of the search space in a downlink only symbol. Further, the PDCCH MO of the search space may not be monitored in the SBFD symbol. If it is '1', the terminal may monitor the PDCCH MO of the search space in the SBFD symbol. Further, the PDCCH MO of the search space may not be monitored in the downlink only symbol.

According to another embodiment, the terminal may define the operation of the terminal in case that the PDCCH MO of the search space overlaps with the RB used for uplink (UL) transmission. In particular, if there is overlapping, the terminal may not monitor the PDCCH MO, may not monitor the overlapping PDCCH, may not monitor the overlapping CCE, may not monitor the overlapping REG bundle, may not monitor the overlapping REG, or may not monitor the overlapping RE.

[Advantageous Effects]

The disclosure provides a device and method capable of effectively providing a service in a mobile communication system.

The effects obtainable from the disclosure are not limited to the effects mentioned above, and other effects not mentioned will be clearly understood by those skilled in the art from the description below.

[Brief description of Drawings]

FIG. 1 is a diagram illustrating a basic structure of a time-frequency domain in a wireless communication system according to an embodiment of the disclosure.

FIG. 2 is a diagram illustrating structures of a frame, a subframe, and a slot in a wireless communication system according to an embodiment of the disclosure.

FIG. 3 is a diagram illustrating an example of a configuration of a BWP in a wireless communication system according to an embodiment of the disclosure.

FIG. 4 is a diagram illustrating an example of configuration of a control resource set (CORESET) of a downlink control channel in a wireless communication system according to an embodiment of the disclosure.

FIG. 5 is a diagram illustrating a structure of a downlink control channel in a wireless communication system according to an embodiment of the disclosure.

FIG. 6 is a diagram illustrating a method for a base station and a UE to transmit/receive data in consideration of a downlink data channel and a rate matching resource in a wireless communication system according to an embodiment of the disclosure.

FIG. 7 is a diagram illustrating an example of allocating resources on a frequency domain of a PDSCH in a wireless communication system according to an embodiment of the disclosure.

FIG. 8 is a diagram illustrating an example of time domain resource assignment of a PDSCH in a wireless communication system according to an embodiment of the disclosure.

FIG. 9 is a diagram illustrating an example of time domain resource assignment depending on subcarrier spacing of a data channel and a control channel in a wireless communication system according to an embodiment of the disclosure.

FIG. 10 is a diagram illustrating a wireless protocol structure of a base station and UE in a situation of single cell, carrier aggregation, and dual connectivity in a wireless communication system according to an embodiment of the disclosure.

FIG. 11 is a diagram illustrating a time division duplex (TDD) configuration and subband non-overlapping full duplex (SBFD) configuration according to an embodiment of the disclosure.

FIG. 12 is a diagram illustrating uplink (UL) subband configuration and physical downlink shared channel (PDSCH) scheduling in a slot according to an embodiment of the disclosure.

FIG. 13 is a diagram illustrating downlink (DL) subband configuration and physical uplink shared channel (PUSCH) scheduling in a slot according to an embodiment of the disclosure.

FIG. 14 is a diagram illustrating a method for receiving a first demodulation reference signal (DMRS) of a physical downlink shared channel (PDSCH) in a symbol immediately following a UL subband according to an embodiment of the disclosure.

FIG. 15 is a diagram illustrating a method for receiving a first demodulation reference signal (DMRS) of a physical downlink shared channel (PDSCH) in a region after K symbols after a UL subband according to an embodiment of the disclosure.

FIG. 16 is a diagram illustrating a method for determining that physical downlink shared channel (PDSCH) reception is impossible in some resource blocks (RB) of a symbol after a UL subband according to an embodiment of the disclosure.

FIG. 17 is a diagram illustrating a method for determining that physical downlink shared channel (PDSCH) reception is impossible in all resource blocks (RB) of a symbol after a UL subband according to an embodiment of the disclosure.

FIG. 18 is a diagram illustrating a method for determining that physical downlink shared channel (PDSCH) reception is impossible in some resource blocks (RB) of a symbol before a UL subband according to an embodiment of the disclosure.

FIG. 19 is a diagram illustrating a method for assuming that PDSCH reception is impossible in all resource blocks (RB) of a symbol before a UL subband according to an embodiment of the disclosure.

FIG. 20 is a diagram illustrating a method for dividing a physical downlink shared channel (PDSCH) into two segments based on UL subband configuration, and assuming reception of a first demodulation reference signal (DMRS) in each segment, according to an embodiment of the disclosure.

FIG. 21 is a diagram illustrating a method for receiving a first demodulation reference signal (DMRS) in case that a PDSCH scheduling region overlaps with a UL subband in a time domain according to an embodiment of the disclosure.

FIG. 22 is a diagram illustrating a method for considering a symbol in which a downlink (DL) subband is configured as an invalid symbol in case of a Type-B physical uplink shared channel (PUSCH) repetition according to an embodiment of the disclosure.

FIG. 23 is a diagram illustrating a structure of a UE in a wireless communication system according to an embodiment of the disclosure.

FIG. 24 is a diagram illustrating a structure of a base station in a wireless communication system according to an embodiment of the disclosure.

[Mode for Disclosure]

Hereinafter, an embodiment of the disclosure will be described in detail with reference to the attached drawings.

In describing embodiments, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements. In addition, in describing the disclosure, in case that the detailed description of a relevant function or configuration is determined to unnecessarily obscure the main idea of the disclosure, the detailed description thereof will be omitted. Also, the terms as used herein are those defined by taking into account functions in the disclosure, and may vary depending on the intention of users or operators, precedents, or the like. Therefore, their definitions should be made based on the description throughout the specification.

Hereinafter, a base station is a subject for performing allocation of a resource for a terminal, and may be at least one of a gNode B, an eNode B, a Node B, a base station (BS), a wireless access unit, a base station controller, and a network node. A terminal may include a user equipment (UE), a mobile station (MS), a cellular phone, a smart phone, a computer, or a multimedia system capable of performing a communication function. In the disclosure, a downlink (DL) is a wireless transmission path through which a base station transmits a signal to a UE, and an uplink (UL) is a wireless transmission path through which a UE transmits a signal to a base station. Further, hereinafter, an LTE or LTE-A system may be described as an example, but the embodiments of the disclosure may be applied to other communication systems having similar technical backgrounds or channel types. For example, the 5th generation mobile communication technology (5G, new radio, NR) developed after LTE-A may be included therein, and the 5G below may also be a concept that includes existing LTE, LTE-A, and other similar services. Further, the disclosure may be applied to other communication systems through partial modification thereof without significantly departing from the scope of the disclosure, as judged by those skilled in the art.

Herein, it will be understood that each block of the flowchart illustrations, and combinations of blocks in the flowchart illustrations, can be implemented by computer program instructions. These computer program instructions may be loaded in a processor of a general purpose computer, a special purpose computer, or other programmable data processing equipment, and thus, the instructions performed by a processor of a computer or other programmable data processing equipment may generate a means configured to perform functions described in flowchart block(s). These computer program instructions may also be stored in a computer usable or computer-readable memory that can direct a computer or other programmable data processing equipment to implement a function in a particular manner, such that the instructions stored in the computer usable or computer-readable memory produce an article of manufacture including instruction means that implement the function specified in the flowchart block(s). These computer program instructions may also be loaded in a computer or other programmable data processing equipment, and thus, a computer-executable process may also be generated by performing a series of operation steps on the computer or the other programmable data processing equipment so that the instructions executed in the computer or the other programmable data processing equipment provide steps for executing functions described in flowchart block(s).

Furthermore, each block may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the corresponding function.

As used herein, the '~unit' refers to a software element or a hardware element, such as field programmable gate array (FPGA) or application specific integrated circuit (ASIC), which performs a predetermined function. However, the '~unit' does not always have a meaning limited to software or hardware. The '~unit' may be constructed either to be stored in an addressable storage medium or to execute one or more processors. Therefore, the '~unit' includes, for example, elements such as software elements, object-oriented software elements, class elements and task elements, processes, functions, properties, procedures, sub-routines, segments of a program code, drivers, firmware, micro-codes, circuits, data, database, data structures, tables, arrays, and parameters. The elements and functions provided by the '~unit' may be either combined into a smaller number of elements, and a '~unit', or divided into a larger number of elements, and a '~unit'. Moreover, the elements and '~unit' may be implemented to reproduce one or more CPUs within a device or a security multimedia card. Also, in an embodiment, a '~unit' may include one or more processors.

A wireless communication system has evolved from a system providing voice-oriented services to a broadband wireless communication system providing high speed high quality packet data services of communication standards such as high speed packet access (HSPA) of 3GPP, long term evolution (LTE) or evolved universal terrestrial radio access (E-UTRA), LTE-advanced (LTE-A), LTE-Pro, high rate packet data (HRPD) of 3GPP2, ultra mobile broadband (UMB), and IEEE 802.16e.

As a representative example of such a broadband wireless communication system, an LTE system adopts Orthogonal Frequency Division Multiplexing (OFDM) for downlink (DL) and Single Carrier Frequency Division Multiple Access (SC-FDMA) for uplink (UL). The UL refers to a radio link for a user equipment (UE) or mobile station (MS) to transmit data or a control signal to a base station (eNode B or BS), and the DL refers to a radio link for a base station to transmit data or a control signal to a UE. The multiple access scheme as described above normally allocates and operates time-frequency resources for carrying data or control information of each user to prevent the time-frequency resources from overlapping with each other (or not overlapping), that is, establish orthogonality therebetween, thereby identifying the data or the control information of each user.

As a future communication system after the LTE system, that is, a 5G communication system, has to be able to freely reflect various requirements of a user and a service provider, and thus, services satisfying various requirements need to be supported. The services considered for the 5G communication system include enhanced mobile broadband (eMBB), massive machine type communication (mMTC), ultra reliability low latency communication ( URLLC), etc.

The eMBB aims to provide a further improved higher data rate than a data rate supported by the existing LTE, LTE-A, or LTE-Pro. For example, in the 5G communication system, the eMBB should be able to provide a peak data rate of 20 Gbps in the DL and a peak data rate of 10 Gbps in the UL from the viewpoint of one base station. In addition, 5G communication systems must provide an increased user perceived data rate while also providing the peak data rate. In order to satisfy such requirements, improvement of various transmitting/receiving technologies including a further improved multiple-input and multiple-output (MIMO) transmission technology may be demanded. Also, the 5G communication system may satisfy a data rate required in the 5G communication system by using a frequency bandwidth wider than 20 MHz in a frequency band of 3 to 6 GHz or equal to or greater than 6 GHz, while the LTE transmits signals by using the maximum transmission bandwidth of 20MHz in the band of 2 GHz.

At the same time, the mMTC is being considered to support application services such as Internet of Thing (IoT) in the 5G communication system. The mMTC is required for an access support of a large-scale UE in a cell, coverage enhancement of a UE, improved battery time, and cost reduction of a UE in order to efficiently provide the IoT. The IoT needs to be able to support a large number of UEs (e.g., 1,000,000 terminals/km$^2$) in a cell because it is attached to various sensors and various devices to provide communication functions. Also, due to the nature of the service, the UE supporting mMTC is likely to be located in a shaded area that is not covered by the cell, such as the basement of a building, and thus, wider coverage than other services provided by the 5G communication systems may be required. The UEs that support the mMTC should be configured as inexpensive UEs and require very long battery lifetime, such as 10 to 15 years, because it is difficult to frequently replace batteries of the UEs.

Finally, the URLLC is a cellular-based wireless communication service used for mission-critical purposes. For example, in the case of URLLC, services used for remote control of robots or machinery, industrial automation, unmanaged aerial vehicles, remote health care, emergency alert, etc. may be considered. Therefore, the communication provided by the URLLC needs to provide ultra-low latency and ultra-high reliability. For example, a service supporting URLLC has to satisfy air interface latency of less than 0.5 milliseconds. At the same time, the service has the requirement of a packet error rate of $10^{-5}$ or less. Accordingly, for the service supporting the URLLC, the 5G system needs to require providing a transmit time interval (TTI) shorter than those for other services, and at the same time design considerations may require allocating a broad resource in a frequency band in order to secure the reliability of communication links.

The three services of 5G, i.e., eMBB, URLLC, and mMTC, may be multiplexed and transmitted in one system. In this case, different transmission and reception techniques and transmission and reception parameters may be used between services to satisfy the different requirements of respective services. Apparently, the 5G is not limited to the three services described above.

NR(new radio) time-frequency resource

Hereinafter, a frame structure of a 5G system will be described in more detail with reference to the drawings.

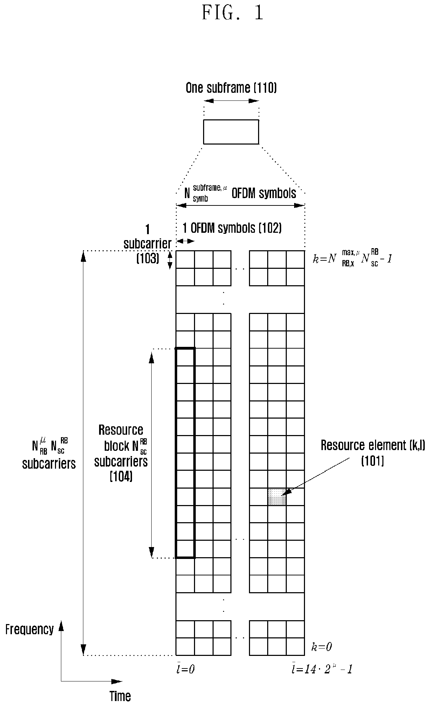

FIG. 1 is a diagram illustrating a basic structure of a time-frequency domain in a wireless communication system according to an embodiment of the disclosure.

FIG. 1 is a diagram illustrating a basic structure of a time-frequency domain, which is a wireless resource region in which data or control channel is transmitted in a 5G system according to an embodiment of the disclosure.

In FIG. 1, the horizontal axis represents a time domain and the vertical axis represents a frequency domain. A basic unit of resources in the time-frequency domain is a resource element (RE) 101 and may be defined as one orthogonal frequency division multiplexing (OFDM) symbol 102 on the time domain and one subcarrier 103 on the frequency domain. In the frequency domain, $N_{SC}^{RB}$ (e.g., 12) consecutive REs may constitute one resource block (RB) 104.

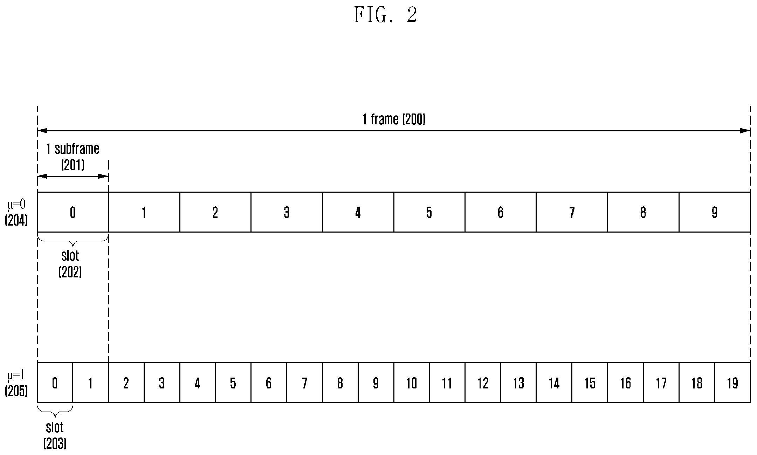

FIG. 2 is a diagram illustrating structures of a frame, a subframe, and a slot in a wireless communication system according to an embodiment of the disclosure.

In FIG. 2, an example of a frame 200, a subframe 201, and a slot 202 is illustrated. One frame 200 may be defined as 10 ms. One subframe 201 may be defined as 1 ms. Therefore, one frame 200 may include a total of 10 subframes 201. One slot 202 or 203 may be defined as 14 OFDM symbols (that is, the number of symbols per slot $(N_{symbol}^{slot})=14$ ). One subframe 201 may include one or more slots 202 or 203, and the number of slots 202 or 203 per subframe 201 may vary according to a subcarrier spacing configuration value $\mu$ (204 and 205). In the example of FIG. 2, as the subcarrier spacing configuration values, the cases of $\mu=0$(204) and $\mu=1$(205) are illustrated. In the case of $\mu=0$

(204), one subframe 201 may include one slot 202, and in the case of $\mu=1$ (205), one subframe 201 may include two slots 203. That is, depending on the subcarrier spacing configuration value $\mu$, the number of slots per subframe ( $N_{slot}^{subframe,\mu}$ ) may vary, and the number of slots per frame ( $N_{slot}^{frame,\mu}$ ) may vary accordingly. $N_{slot}^{subframe,\mu}$ and $N_{slot}^{frame,\mu}$ according to each subcarrier spacing configuration $\mu$ may be defined as in [Table 1] below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| | | | |
| 4 | 14 | 160 | 16 |

(continued)

| $\mu$ | $N_{symb}^{slot}$ | $N_{slot}^{frame,\mu}$ | $N_{slot}^{subframe,\,\mu}$ |
|---|---|---|---|
| 5 | 14 | 320 | 32 |

Bandwidth Part (BWP)

Next, the bandwidth part (BWP) configuration in the 5G communication system will be specifically explained with reference to the drawing.

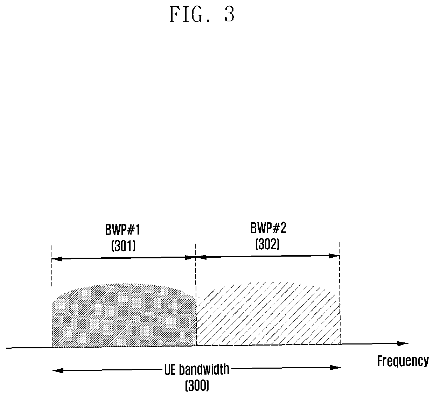

FIG. 3 is a diagram illustrating an example of a configuration of a BWP in a wireless communication system according to an embodiment of the disclosure.

FIG. 3 illustrates an example in which UE bandwidth 300 is configured with two BWPs, i.e., a BWP #1 301 and a BWP #2 302. The base station may configure one or a plurality of BWPs to the UE and may configure the following information as in Table 2 for each BWP

【Table 2】

```
BWP ::=                              SEQUENCE {
          bwp-Id                                 BWP-Id,
     (BWP identity)
          locationAndBandwidth       INTEGER (1..65536),
     (BWP location)
          subcarrierSpacing          ENUMERATED {n0, n1, n2, n3, n4, n5},
     (subcarrier spacing)
          cyclicPrefix                          ENUMERATED { extended }

     (cyclic prefix)
}
```

However, the disclosure is not limited to the above example, and various parameters related to a BWP in addition to the above configuration information may be configured for the UE. The base station may transmit the above information to the UE through higher layer signaling, for example, radio resource control (RRC) signaling. At least one BWP from among the configured one or a plurality of BWPs may be activated. Whether to activate the configured BWP may be transmitted from the base station to the UE semi-statically via RRC signaling or dynamically via a downlink control information (DCI).

According to some embodiments, the UE before radio resource control (RRC) connection may be configured with an initial BWP for initial access through a master information block (MIB) from the base station. In more detail, the UE may receive configuration information for a search space and a control resource set (CORESET) where a PDCCH may be transmitted in order to receive system information (remaining system information (RMSI) or system information block 1 (SIB1)) required for initial access through the MIB in an initial access stage. An identity (ID) of each of the control resource set and the search space configured through the MIB may be considered as 0. The base station may notify the UE of configuration information such as frequency allocation information, time allocation information, and numerology for control resource set #0 through MIB. In addition, the base station may notify the UE of configuration information for monitoring periodicity and occasion for control resource region #0, i.e., configuration information for search space #0, through MIB. The UE may regard the frequency domain configured as control resource set #0 obtained from MIB as an initial BWP for initial access. Here, the identity (ID) of the initial BWP may be regarded as 0.

The above configuration for the BWP supported by the 5G may be used for various purposes.

According to some embodiments, in case that a bandwidth supported by the UE is less than a system bandwidth, a bandwidth supported by the UE may be supported through the above BWP configuration. For example, by configuring a frequency location (configuration information 2) of a BWP by the base station to the UE, the UE may transmit/receive data at a specific frequency location in the system bandwidth.

In addition, according to some embodiments, the base station may configure a plurality of BWPs to the UE for a purpose of supporting different numerologies. For example, to support data transmission/reception using subcarrier spacing of 15 kHz and subcarrier spacing of 30 kHz for a certain UE, two BWPs may be configured with the subcarrier spacings of 15 kHz and 30 kHz, respectively. Different BWPs may be frequency division multiplexed. In case that data is to be transmitted and received at specific subcarrier spacing, the BWP configured with the corresponding subcarrier spacing may be activated.

In addition, according to some embodiments, the base station may configure BWPs having different sizes of bandwidths to the UE for a purpose of reducing power consumption of the UE. For example, in case that the UE supports a very large bandwidth, for example, a bandwidth of 100 MHz, and always transmits/receives data via the corresponding bandwidth, very large power consumption may occur. In particular, it is very inefficient in terms of power consumption for the UE to monitor an unnecessary DL control channel for a large bandwidth of 100 MHz in a situation where there is no traffic. The base station may configure a BWP of a relatively small bandwidth, for example, a BWP of 20 MHz, to the UE for a purpose of reducing the power consumption of the UE. In a situation where there is no traffic, the UE may perform a monitoring operation in a BWP of 20 MHz, and in case that data is generated, the UE may transmit/receive the data by using a BWP of 100 MHz according to an indication of the base station

In the above method for configuring a BWP, UEs before RRC connection may receive configuration information regarding an initial bandwidth part through a master information block (MIB) in an initial access stage. More specifically, the UE may be configured with a control resource set (CORESET) for a DL control channel through which downlink control information (DCI) for scheduling a system information block (SIB) may be transmitted from an MIB of a physical broadcast channel (PBCH). The bandwidth of the CORESET configured via the MIB may be regarded as the initial BWP, and the UE may receive the physical downlink shared channel (PDSCH), through which the SIB is transmitted, via the configured initial BWP. In addition to the purpose of receiving the SIB, the initial BWP may be utilized for other system information (OSI), paging, and random access.

Change of Bandwidth Part (BWP)

In case that one or more BWPs are configured for the UE, the base station may indicate the UE to change (switch or transition) the BWP using a bandwidth part indicator field in the downlink control information (DCI). In case that a currently active BWP of the UE is BWP #1 301 in FIG. 3, the base station may indicate BWP #2 302 to the UE using a BWP indicator in the DCI, and the UE may perform changing of a BWP to BWP #2 302 indicated by the BWP indicator in the received DCI.

As described above, since DCI-based BWP change is indicated by the DCI for scheduling a PDSCH or PUSCH, in case that the UE receives a request for changing the BWP, the UE must perform reception and transmission of a PDSCH or PUSCH scheduled by the corresponding DCI in the changed BWP. To this end, the standard stipulates the requirements for a delay time ($T_{BWP}$) required in changing the BWP, and may be defined, for example, as in Table 3 below.

[Table 3]

| μ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for a BWP change delay time support type 1 or type 2 according to UE capability. The UE may report the type of BWP delay time to be supportable to the base station.

In accordance with the above-described requirements for a BWP change delay time, in case that the UE receives DCI including a BWP change indicator in slot n, the UE may complete a change to a new BWP indicated by the BWP change indicator at the time not later than slot n+$T_{BWP}$, and perform transmission and reception of a data channel scheduled by the corresponding DCI in the new changed BWP. In case that the base station is to schedule a data channel with a new BWP, the base station may determine resource allocation for the data channel in the time domain in consideration of the BWP change delay time ($T_{BWP}$) of the UE. That is, when scheduling a data channel with a new BWP, the base station may schedule a corresponding data channel after the BWP change delay time in a method for determining time domain resource assignment for the data channel. Accordingly, the UE may not expect that the DCI indicating the BWP change will indicate a slot offset value (K0 or K2) smaller than the BWP change delay time ($T_{BWP}$).

If the UE receives a DCI (e.g., DCI format 1_1 or 0_1) indicating a BWP change, the UE may not perform any transmission or reception during a period of time from the third symbol of the slot in which a PDCCH including the corresponding DCI is received to the starting point of the slot indicated by a slot offset value (K0 or K2) indicated by a time-domain resource assignment indicator field in the corresponding DCI. For example, if the UE receives DCI indicating a BWP change in slot n, and if the slot offset value indicated by the corresponding DCI is K, the UE may not perform any transmission or reception from the third symbol of slot n to the symbol before slot n+K (i.e., the last symbol of slot n+K-1).

Synchronization signal (SS)/physical broadcast channel (PBCH) block

Next, a synchronization signal (SS)/ physical broadcast channel (PBCH) block in 5G will be described.

The SS/PBCH block may refer to a physical layer channel block composed of a primary SS (PSS), a secondary SS (SSS), and a PBCH. More specifically, the SS/PBCH block may be as follows.

- PSS: This is a reference signal for downlink time/frequency synchronization, and may provide some information of a cell ID.
- SSS: This is a reference for downlink time/frequency synchronization, and may provide the remaining information of the cell ID. Additionally, this may serve as a reference signal for demodulation of a PBCH.
- PBCH: This may provide essential system information necessary for transmission and reception of a data channel and a control channel of a UE. The essential system information may include search space-related control information indicating radio resource mapping information of a control channel, scheduling control information for a separate data channel transmitting system information, and the like.
- SS/PBCH block: The SS/PBCH block may be consisted of a combination of a PSS, an SSS, and a PBCH. One or more SS/PBCH blocks may be transmitted within a time of 5 ms, and each transmitted SS/PBCH block may be distinguished by an index.

The UE may detect a PSS and an SSS in the initial access stage, and may decode a PBCH. The UE may obtain an MIB from the PBCH, and may be configured to control resource set (CORESET) #0 (this may correspond to a control resource set having an index "0") through the MIB. The UE may assume that a selected SS/PBCH block and a demodulation reference signal (DMRS) transmitted in control resource set #0 have a relationship of quasi co-location (QCL), thereby monitoring control resource set #0. The UE may receive system information through downlink control information transmitted in control resource set #0. The UE may obtain configuration information related to a random access channel (RACH), which is necessary for initial access, from the received system information. The UE may transmit a physical RACH (PRACH) to the base station in consideration of the selected SS/PBCH index, and the base station that has received the PRACH may obtain information on the SS/PBCH block index selected by the UE. The base station may recognize the block selected by the UE from among the respective SS/PBCH blocks and that control resource set #0 associated with the same is monitored.

Related to physical downlink control channel (PDCCH): downlink control channel (DCI)

Next, downlink control information (DCI) in a 5G system will be described in detail.

In a 5G system, scheduling information on uplink data (or a physical uplink shared channel, PUSCH) or downlink data (or a physical downlink shared channel, PDSCH) may be transferred from a base station to a UE through DCI. The UE may monitor a fallback DCI format and a non-fallback DCI format with respect to a PUSCH or PDSCH. The fallback DCI format may be configured with a fixed field that is predefined between the base station and the UE, and the non-fallback DCI format may include a configurable field.

The DCI may be transmitted through a physical downlink control channel (PDCCH) after a channel coding and modulation process. A cyclic redundancy check (CRC) may be attached to the payload of a DCI message, and the CRC may be scrambled with a radio network temporary identifier (RNTI) corresponding to the identity of the UE. Different RNTIs may be used depending on the purpose of a DCI message, for example, transmission of UE-specific data, power control command, random access response, or the like. That is, the RNTI is included in the CRC calculation process, and transmitted, instead of being explicitly transmitted. If a DCI message transmitted through a PDCCH is received, the UE may check the CRC using the allocated RNTI, and if the CRC check result is correct, the UE may recognize that the corresponding message is transmitted to the UE.

For example, the DCI for scheduling a PDSCH for system information (SI) may be scrambled by a system information - radio network temporary identifier (SI-RNTI, system information RNTI). The DCI for scheduling a PDSCH for a random access response (RAR) message may be scrambled by a random access - radio network temporary identifier (RA-RNTI, random access RNTI). The DCI for scheduling a PDSCH for a paging message may be scrambled by a paging-radio network temporary identifier (P-RNTI, paging RNTI). The DCI notifying slot format indicator (SFI) may be scrambled by a slot format indicator - radio network temporary identifier (SFI-RNTI, slot format indicator RNTI). The DCI notifying transmit power control (TPC) may be scrambled by a transmit power control - radio network temporary identifier (TPC-RNTI, transmit power control RNTI). The DCI for scheduling a UE-specific PDSCH or PUSCH may be scrambled by a cell-RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include, for example, information of Table 4 below.

[Table 4]

- Identifier for DCI formats - [1] bit

- Frequency domain resource assignment - $[\lceil \log_2 (N_{RB}^{UL,BWP} (N_{RB}^{UL,BWP} + 1)/2) \rceil]$ bits
- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- TPC command for scheduled PUSCH - [2] bits
- UL/SUL indicator - 0 or 1 bit

DCI format 0_1 may be used as non-fallback DCI for scheduling a PUSCH, and in this case, the CRC may be scrambled by a C-RNTI. DCI format 0_1 in which the CRC is scrambled by a C-RNTI may include, for example, information of Table 5 below.

[Table 5]

- Carrier indicator (carrier indicator) - 0 or 3 bits
- UL/SUL indicator - 0 or 1 bit
- Identifier for DCI formats - [1] bits
- Bandwidth part indicator (bandwidth part indicator) - 0, 1 or 2 bits
- Frequency domain resource assignment

    • For resource allocation type 0(for resource allocation type 0), $\left\lceil N_{RB}^{UL,BWP} / P \right\rceil$ bits

    • For resource allocation type 1(for resource allocation type 1), $\left\lceil \log_2 (N_{RB}^{UL,BWP} (N_{RB}^{UL,BWP} + 1)/2) \right\rceil$ bits
- Time domain resource assignment -1, 2, 3, or 4 bits
- VRB-to-PRB mapping (VRB(virtual resource block)-to-PRB(physical resource block) mapping) - 0 or 1 bit, only for resource allocation type 1.
    • 0 bit if only resource allocation type 0 is configured;
    • 1 bit otherwise.
- Frequency hopping flag - 0 or 1 bit, only for resource allocation type 1.

    • 0 bit if only resource allocation type 0 is configured;
    • 1 bit otherwise.
- Modulation and coding scheme - 5 bits
- New data indicator - 1 bit
- Redundancy version - 2 bits
- HARQ process number - 4 bits

(continued)

| |
|---|
| - 1st downlink assignment index (1st downlink assignment index)- 1 or 2 bits<br>  • 1 bit for semi-static HARQ-ACK codebook(for semi-static HARQ-ACK codebook);<br>  • 2 bits for dynamic HARQ-ACK codebook with single HARQ-ACK codebook(for dynamic HARQ-ACK codebook with single HARQ-ACK codebook).<br>- 2nd downlink assignment index [2nd downlink assignment index] - 0 or 2 bits<br>  • 2 bits for dynamic HARQ-ACK codebook with two HARQ-ACK sub-codebooks(for dynamic HARQ-ACK codebook with two HARQ-ACK sub-codebooks);<br>  • 0 bit otherwise.<br>- TPC command for scheduled PUSCH - 2 bits |

- SRS resource indicator (SRS resource indicator) - $\left\lceil \log_2\left( \sum_{k=1}^{L_{max}} \binom{N_{SRS}}{k} \right) \right\rceil$ or $\lceil \log_2(N_{SRS}) \rceil$ bits

  • $\left\lceil \log_2\left( \sum_{k=1}^{L_{max}} \binom{N_{SRS}}{k} \right) \right\rceil$ bits for non-codebook based PUSCH transmission(for non-codebook based PUSCH transmission);

  • $\lceil \log_2(N_{SRS}) \rceil$ bits for codebook based PUSCH transmission(for codebook based PUSCH transmission).

- Precoding information and number of layers (precoding information and number of layers)-up to 6 bits
- Antenna ports (antenna ports)- up to 5 bits
- SRS request (SRS request)- 2 bits
- CSI request (channel state information request) - 0, 1, 2, 3, 4, 5, or 6 bits
- CBG transmission information (CBG(code block group) transmission information)-0, 2, 4, 6, or 8 bits
- PTRS-DMRS association (phase tracking reference signal -demodulation reference signal association)- 0 or 2 bits.
- beta_offset indicator (betta offset indicatior)- 0 or 2 bits
- DMRS sequence initialization (demodulation reference signal sequence initialization)- 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include, for example, information of Table 6 below.

[Table 6]

| |
|---|
| - Identifier for DCI formats - [1] bit<br><br>- Frequency domain resource assignment - $\left\lceil \lceil \log_2(N_{RB}^{DL,BWP}(N_{RB}^{DL,BWP}+1)/2) \rceil \right\rceil$ bits<br>- Time domain resource assignment - X bits<br>- VRB-to-PRB mapping - 1 bit.<br>- Modulation and coding scheme - 5 bits<br>- New data indicator - 1 bit<br>- Redundancy version - 2 bits |

(continued)

- HARQ process number - 4 bits
- Downlink assignment index - 2 bits
- TPC command for scheduled PUCCH - [2] bits
- PUCCH resource indicator (PUCCH(physical uplink control channel) resource indicator- 3 bits
- PDSCH-to-HARQ feedback timing indicator (PDSCH-to-HARQ feedback timing indicator)- [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include, for example, information of Table 7 below.

[Table 7]

- Carrier indicator - 0 or 3 bits
- Identifier for DCI formats - [1] bits
- Bandwidth part indicator - 0, 1 or 2 bits
- Frequency domain resource assignment

For resource allocation type 0, $\left\lceil N_{RB}^{DL,BWP}/P \right\rceil$ bits

For resource allocation type 1, $\left\lceil \log_2 (N_{\mathrm{RB}}^{\mathrm{DL,BWP}} (N_{\mathrm{RB}}^{\mathrm{DL,BWP}} + 1) / 2) \right\rceil$ bits

- Time domain resource assignment -1, 2, 3, or 4 bits
- VRB-to-PRB mapping - 0 or 1 bit, only for resource allocation type 1.

0 bit if only resource allocation type 0 is configured;
1 bit otherwise.

- PRB bundling size indicator - 0 or 1 bit
- Rate matching indicator - 0, 1, or 2 bits
- ZP CSI-RS trigger - 0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits
- CBG flushing out information - 0 or 1 bit
- DMRS sequence initialization - 1 bit

Physical Downlink Control Channel (PDCCH): Control Resource Set (CORESET), Resource Element Group (REG), Control Channel Element (CCE), Search Space

Hereinafter, a downlink control channel in a 5G communication system will be described in more detail with reference to the drawings.

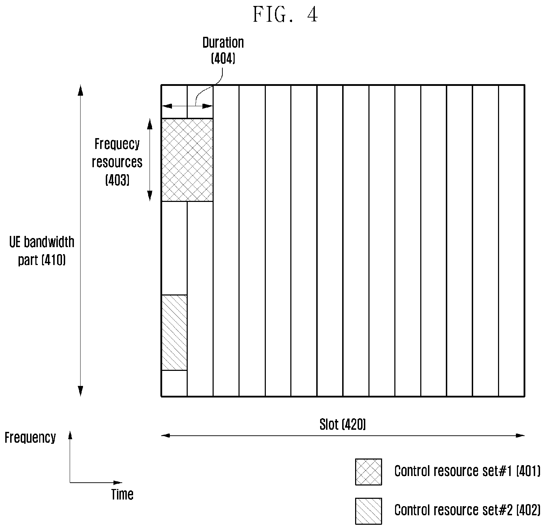

FIG. 4 is a diagram illustrating an example of a control resource set (CORESET) in which a downlink control channel is transmitted in a 5G wireless communication system.

FIG. 4 illustrates an example in which two control resource sets (control resource set #1 401 and control resource set #2 402) are configured in a UE bandwidth part 410 in the frequency domain and in one slot 420 in the time domain. The control resource set 401 or 402 may be configured in a specific frequency resource 403 within the entire UE bandwidth part 410 in the frequency domain. The control resource set 401 or 402 may be configured using one or a plurality of orthogonal frequency division multiplexing (OFDM) symbols in the time domain, and this may be defined as control resource set duration 404. With reference to the example illustrated in FIG. 4, control resource set #1 401 may be configured to have a control resource set duration of two symbols, and control resource set #2 402 may be configured to have a control resource set duration of one symbol.

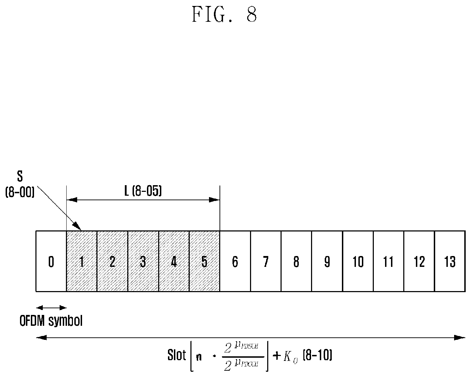

The above-described control resource sets in 5G may be configured by the base station to the UE through higher layer signaling (e.g., system information, a master information block (MIB), and radio resource control (RRC) signaling). Configuring the control resource set for the UE denotes providing the UE with information such as a control resource set identity, the frequency location of the control resource set, the symbol duration of the control resource set, and the like. For example, the configuration of the control resource set may include, for example, information of FIG. 8 below.

【Table 8】

```
ControlResourceSet ::=                              SEQUENCE {
        -- Corresponds to L1 parameter 'CORESET-ID'

        controlResourceSetId                              ControlResourceSetId,
    (control area identity(Identity))
```

```
          frequencyDomainResources                              BIT STRING (SIZE (45)),
     (information for frequency axis resource allocation)
          duration                                                        INTEGER (1..m
axCoReSetDuration),
     (information for time axis resource allocation)
          cce-REG-MappingType                                                     CHOI
CE {
     (CCE-to-REG mapping type)
               interleaved
          SEQUENCE {

               reg-BundleSize
          ENUMERATED {n2, n3, n6},
          (REG bundle size)

               precoderGranularity
          ENUMERATED {sameAsREG-bundle, allContiguousRBs},

               interleaverSize
          ENUMERATED {n2, n3, n6}
               (interleaver size)

               shiftIndex
          INTEGER(0..maxNrofPhysicalResourceBlocks-1)
                                                        OPTIONAL
          (interleaver shift(Shift))
        },
          nonInterleaved                                              NULL
        },
          tci-StatesPDCCH                                       SEQUENCE(SIZ
E (1..maxNrofTCI-StatesPDCCH)) OF TCI-StateId                           OPTI
ONAL,
     (QCL configuration information)
          tci-PresentInDCI                                  ENUMERATED {enable
d}
                         OPTIONAL,       -- Need S
}
```

In Table 8, tci-StatesPDCCH (simply referred to as a transmission configuration indication (TCI) state) configuration information may include information on one or a plurality of synchronization signal (SS)/physical broadcast channel (PBCH) block indexes or channel state information reference signal (CSI-RS) indexes having a quasi co-located (QCL) relationship with a DMRS transmitted in the corresponding control resource set.

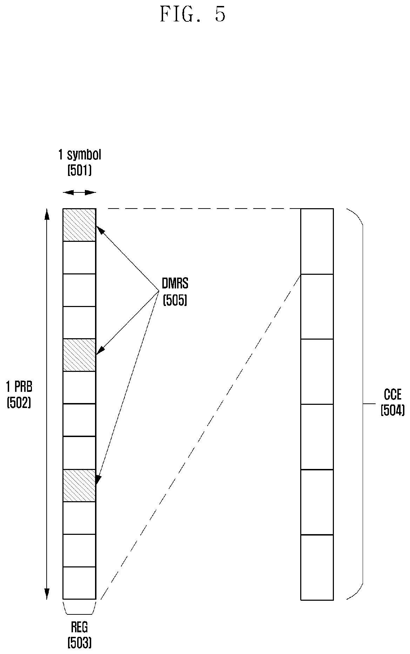

FIG. 5 is a diagram illustrating an example of a basic unit of time and frequency resources that forms a downlink control channel that may be used in 5G.

With reference to FIG. 5, a basic unit of time and frequency resources that forms a control channel may be referred to as a resource element group (REG) 503, and the REG 503 may be defined as one OFDM symbol 501 in the time domain and one physical resource block (PRB) 502 in the frequency domain, that is, it may be defined as 12 subcarriers. The base station may form a downlink control channel allocation unit by concatenating the REG 503.

As illustrated in FIG. 5, in case that the basic unit in which the downlink control channel is allocated in 5G is a control channel element (CCE) 504, one CCE 504 may include a plurality of REGs 503. For example, the REG 503 illustrated in FIG. 5 may be include 12 REs, and if one CCE 504 is composed of six REGs 503, one CCE 504 may include 72 REs. If the downlink control resource set is configured, the corresponding region may include a plurality of CCEs 504, and a specific downlink control channel may be mapped to one or a plurality of CCEs 504 according to the aggregation level (AL) in the control resource set, and may be transmitted. The CCEs 504 in the control resource set may be identified by numbers, and the numbers of the CCEs 504 may be assigned according to a logical mapping scheme.

The basic unit of the downlink control channel illustrated in FIG. 5, that is, the REG 503, may include both the REs to which DCI is mapped and a region to which the DMRS 505, which is a reference signal for decoding the same, is mapped. As shown in FIG. 5, three DMRSs 505 may be transmitted in one REG 503. The number of CCEs required for transmitting a PDCCH may be 1, 2, 4, 8, or 16 depending on the aggregation level (AL), and the different numbers of CCEs may be used to implement link adaptation of the downlink control channel. For example, in the case of AL=L, one downlink control channel may be transmitted through L CCEs. The UE needs to detect a signal without being aware of information on the downlink control channel, and a search space indicating a set of CCEs is defined for blind decoding. The search space is a set of downlink control channel candidates comprised of CCEs that the UE must attempt to decode in a given aggregation level, and since there are various aggregation levels making one bundle of 1, 2, 4, 8, or 16 CCEs, the UE may have a plurality of search spaces. A search space set may be defined as a set of search spaces in all configured aggregation levels.

The search spaces may be classified into a common search space and a UE-specific search space. A specific group of UEs or all UEs may check a common search space of a PDCCH in order to receive cell-common control information such as dynamic scheduling for system information or a paging message. For example, the UE may receive PDSCH scheduling allocation information for transmission of an SIB including cell operator information and the like by checking the common search space of a PDCCH. In the case of the common search space, since a specific group of UEs or all UEs must receive a PDCCH, the common search space may be defined as a set of predetermined CCEs. The scheduling allocation information for a UE-specific PDSCH or PUSCH may be received by checking a UE-specific search space of a PDCCH. The UE-specific search space may be UE-specifically defined as a function of the UE identity and various system parameters.

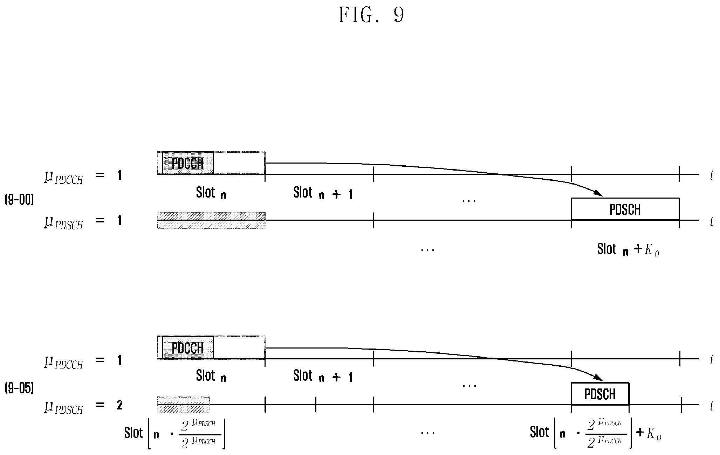

In 5G, the parameters of the search space for a PDCCH may be configured for the UE by the base station using higher layer signaling (e.g., SIB, MIB, or RRC signaling). For example, the base station may configure the number of PDCCH candidates in each aggregation level L, monitoring periodicity for the search space, a monitoring occasion in units of symbols within a slot for the search space, a search space type (a common search space or a UE-specific search space), a combination of a DCI format and an RNTI to be monitored in the corresponding search space, a control resource set index for monitoring the search space, and the like for the UE. For example, the configuration may include, for example, information of FIG. 9 below.

【Table 9】

| SearchSpace ::=  SEQUENCE { |
| --- |
| -- Identity of the search space. SearchSpaceId = 0 identifies the SearchSpace configured via PBCH (MIB) or ServingCellConfigCommon. |
| searchSpaceId  SearchSpaceId, |
| (search space identity) |
| controlResourceSetId  ControlResourceSetId, |

```
(control resource set identity)
        monitoringSlotPeriodicityAndOffset        CHOICE {
(monitoring slot level periodicity)
                sl1                                       NULL,
                sl2                                       INTEGER (0..1),
                sl4                                       INTEGER (0..3),
                sl5                                       INTEGER (0..4),
                sl8                                       INTEGER (0..7),
                sl10                                      INTEGER (0..9),
                sl16                                      INTEGER (0..15),
                sl20                                      INTEGER (0..19)
        }

                                            OPTIONAL,
    duration(monitoring duration)           INTEGER (2..2559)
        monitoringSymbolsWithinSlot                 BIT STRING (SIZE (14))
                                            OPTIONAL,
(monitoring symbol in slot)
        nrofCandidates                              SEQUENCE {
(number of PDCCH candidates in each aggregation level)
                aggregationLevel1                           E N U M E
RATED {n0, n1, n2, n3, n4, n5, n6, n8},
                aggregationLevel2                           E N U M E
RATED {n0, n1, n2, n3, n4, n5, n6, n8},
                aggregationLevel4                           E N U M E
RATED {n0, n1, n2, n3, n4, n5, n6, n8},
                aggregationLevel8                           E N U M E
RATED {n0, n1, n2, n3, n4, n5, n6, n8},
                aggregationLevel16                          E N U M E
RATED {n0, n1, n2, n3, n4, n5, n6, n8}
        },

    searchSpaceType                                 CHOICE {
(search space type)
            -- Configures this search space as common search space (CSS) and DCI fo
rmats to monitor.
            common
SEQUENCE {
```

```
                    (common search space)
              }
                         ue-Specific
              SEQUENCE {
              (UE-specific search space)
                              -- Indicates whether the UE monitors in this USS for DCI formats
0-0 and 1-0 or for formats 0-1 and 1-1.
                         formats                                ENUMERATED {f
ormats0-0-And-1-0, formats0-1-And-1-1},
                         ...
                    }
```

The base station may configure one or a plurality of search space sets for the UE, based on configuration information. According to some embodiments, the base station may configure search space set 1 and search space set 2 for the UE, configure DCI format A scrambled by an X-RNTI in search space set 1 so as to be monitored in the common search space, and configure DCI format B scrambled by a Y-RNTI in the search space set 2 so as to be monitored in the UE-specific search space.

According to configuration information, the common search space or the UE-specific search space may include one or a plurality of search space sets. For example, search space set #1 and search space set #2 may be configured as the common search space, and search space set #3 and search space set #4 may be configured as the UE-specific search space.

In the common search space, a combination of DCI formats and RNTIs may be monitored as follows. Apparently, the disclosure is not limited thereto.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, a combination of DCI formats and RNTIs may be monitored as follows. Apparently, the disclosure is not limited thereto.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs specified may follow the definitions and uses below.

Cell RNTI (C-RNTI): Purpose for scheduling of UE-specific PDSCH
Temporary Cell RNTI (TC-RNTI): Purpose for scheduling of UE-specific PDSCH
Configured Scheduling RNTI (CS-RNTI): Purpose for scheduling of semi-statically configured UE-specific PDSCH
Random Access RNTI (RA-RNTI): Purpose for scheduling of PDSCH in random access stage
Paging RNTI (P-RNTI): Purpose for scheduling of PDSCH in which paging is transmitted
System Information RNTI (SI-RNTI): Purpose for scheduling of PDSCH in which system information is transmitted
Interruption RNTI (INT-RNTI): Purpose for informing whether to puncturing is possible on PDSCH
Transmit power control for PUSCH RNTI (TPC-PUSCH-RNTI): Purpose for indicating power control command for PUSCH
Transmit power control for PUCCH RNTI (TPC-PUCCH-RNTI): Purpose for indicating power control command for PUCCH
Transmit power control for SRS RNTI (TPC-SRS-RNTI): Purpose for indicating power control command for SRS

The above-described DCI formats may follow the definitions as in Table 10 follows.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space of an aggregation level L in a control resource set p and a search space set s may be expressed as in Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- L: Aggregation level
- $n_{CI}$: Carrier index
- $N_{CCE,p}$: Total number of CCEs in control resource set p
- $n_{s,f}^{\mu}$ : Slot index
- $M_{s,max}^{(L)}$ : The number of PDCCH candidates in aggregation level L
- $m_{s,n_{CI}} = 0, \dots , M_{s,max}^{(L)} -1$ : PDCCH candidate index in aggregation level L
- i = 0, ... , L -1
- $Y_{p,n_{s,f}^{\mu}} = \left( A_p \cdot Y_{p,n_{s,f}^{\mu}-1} \right) mod D$ , $Y_{p,-1} = n_{RNTI} \neq 0$, $A_p$ = 39827 for p mod 3 = 0 , $A_p$ = 39829 for p mod 3 = 1 , $A_p$ = 39839 for p mod 3 = 2, D= 65537
- $n_{RNTI}$ : UE identity

The value $Y_{p,n_{s,f}^{\mu}}$ may correspond to zero in the case of a common search space.

In the case of a UE-specific search space, the value $Y_{p,n_{s,f}^{\mu}}$ may correspond to a value that varies depending on the UE identity (C-RNTI or an ID configured to the UE by the base station) and a time index.

In 5G, since a plurality of search space sets may be configured using different parameters (e.g., the parameters in Table 9), a set of search space sets monitored by the UE may differ at each time. For example, in case that search space set #1 is configured in an X-slot periodicity, search space set #2 is configured in a Y-slot periodicity, and X and Y are different, the UE may monitor both search space set #1 and search space set #2 in a specific slot, and may monitor one of search space set #1 and search space set #2 in a specific slot.

Regarding Rate matching/Puncturing

Hereinafter, a rate matching operation and a puncturing operation will be described in detail.

In case that time-and-frequency resources A to transmit arbitrary symbol sequences A overlaps with arbitrary time-and-frequency resources B, a rate matching or puncturing operation may be considered as a transmission/reception operation of a channel A in consideration of a resource C of the region where the resources A and the resources B overlap. A detailed operation may be as follows.

Rate Matching Operation

The base station may map the channel A only to the remaining resource regions, excluding the resource C corresponding to the region overlapping with the resources B, among all the resources A for transmitting the symbol sequences A to the UE, and transmit the same. For example, in case that symbol sequences A is composed of {symbol #1, symbol #2, symbol #3, symbol #4}, where resources A are {resource #1, resource #2, resource #3, resource #4}, and where resources B are {resource #3, resource #5}, the base station may sequentially map symbol sequences A to the remaining resources {resource #1, resource #2, resource #4}, excluding {resource #3} corresponding to resource C, among resources A, and transmit the same. As a result, the base station may map the symbol sequences {symbol #1, symbol #2, symbol #3} to {resource #1, resource #2, resource #4}, respectively, and transmit the same.

The UE may determine resources A and resources B from scheduling information for symbol sequences A from the base station and determine resource C, which is an region where resources A and resources B overlap, according thereto. The UE may receive symbol sequences A, assuming that symbol sequences A are mapped and transmitted in the remaining regions, excluding resource C, among all resources A. For example, in case that symbol sequences A are composed of {symbol #1, symbol #2, symbol #3, symbol #4}, where resources A are {resource #1, resource #2, resource #3, resource #4}, where resources B are {resource #3, resource #5}, the UE may receive symbol sequences A, assuming that symbol sequences A are sequentially mapped to the remaining resources {resource #1, resource #2, resource #4}, excluding {resource #3} corresponding to resource C, among resources A. As a result, the UE may perform a series of subsequent reception operations, assuming that the symbol sequences {symbol #1, symbol #2, symbol #3} are mapped to the resources {resource #1, resource #2, resource #4}, respectively, and transmitted.

Puncturing Operation

In case that there is resource C corresponding to the region overlapping with resources B, among all resources A for transmitting symbol sequences A to the UE, the base station may map symbol sequences A to all resources A and transmit only the remaining resource regions, excluding resource C from among resources A, instead of transmitting in the resource region corresponding to resource C. For example, in case that symbol sequences A are composed of {symbol #1, symbol #2, symbol #3, symbol 4}, where resources A are {resource #1, resource #2, resource #3, resource #4}, and where resources B are {resource #3, resource #5}, the base station may map symbol sequences A {symbol #1, symbol #2, symbol #3, symbol #4} to resources A {resource #1, resource #2, resource #3, resource #4}, respectively, and transmit only the symbol sequence {symbol #1, symbol #2, symbol #4} corresponding to {resource #1, resource #2, resource #4}, which are the remaining resources excluding {resource #3} corresponding to resource C from among resources A, instead of transmitting {symbol #3} mapped to {resource #3} corresponding to resource C. As a result, the base station may map the symbol sequences {symbol #1, symbol #2, symbol #4} to {resource #1, resource #2, resource #4}, respectively, and transmit the same.

The UE may determine resources A and resources B from scheduling information for symbol sequences A from the base station and determine resource C, which is an region where resources A and resources B overlap, according thereto. The UE may receive symbol sequence A, assuming that symbol sequences A are mapped to all resources A but transmitted only in the remaining regions, excluding resource C from among resource regions A. For example, in case that symbol sequences A are composed of {symbol #1, symbol #2, symbol #3, symbol #4}, where resources A are {resource #1, resource #2, resource #3, resource #4}, where resources B are {resource #3, resource #5}, the UE may receive symbol sequences A, assuming that symbol sequences A {symbol #1, symbol #2, symbol #3, symbol #4} are mapped to resources A {resource #1, resource #2, resource #3, resource #4}, respectively, but {symbol #3} mapped to {resource #3} corresponding to resource C is not transmitted, and assuming that the symbol sequences {symbol #1, symbol #2, symbol #4} corresponding to the remaining resources {resource #1, resource #2, resource #4}, excluding {resource #3} corresponding to resource C from among the resources A, are mapped and transmitted. As a result, the UE may perform a series of subsequent reception operations, assuming that the symbol sequences {symbol #1, symbol #2, symbol #4} are mapped to the {resource #1, resource #2, resource #4}, respectively, and transmitted.

Hereinafter, a method for configuring a rate matching resource for the purpose of rate matching in a 5G communication system will be described. Rate matching indicates that the magnitude of a signal is adjusted in consideration of the number of resources capable of transmitting the signal. For example, rate matching of a data channel may indicate that the amount of data is adjusted by not mapping and transmitting a data channel for a specific time-and-frequency resource region.

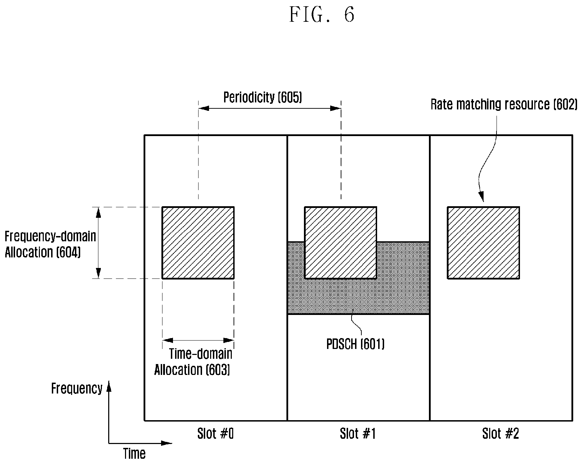

FIG. 6 is a diagram illustrating a method for a base station and a UE to transmit/receive data in consideration of a downlink data channel and a rate matching resource in a wireless communication system according to an embodiment of the disclosure.

FIG. 6 illustrates that a downlink data channel (physical downlink shared channel (PDSCH)) 601 and rate matching resources 602. The base station may configure one or more rate matching resources 602 for the UE through higher layer signaling (e.g., radio resource control (RRC) signaling). Configuration information of the rate matching resource 602 may include time domain resource allocation information 603, frequency domain resource allocation information 604, and periodicity information 605. In the following description, the bitmap corresponding to the frequency domain resource allocation information 604 will be referred to as a "first bitmap", the bitmap corresponding to the time domain resource allocation information 603 will be referred to as a "second bitmap", and the bitmap corresponding to the periodicity information 605 will be referred to as a "third bitmap". In case that all or some of the time and frequency resources of the scheduled data channel 601 overlap with the configured rate matching resources 602, the base station may rate-match the data channel 601 in the rate matching resource 602 part and transmit the same, and the UE may perform reception and decoding, assuming that the data channel 601 is rate-matched in the rate matching resource 602 part.

The base station may dynamically notify the UE through DCI of whether or not to rate-match the data channel in the configured rate matching resource part by additional configuration (this corresponds to a "rate matching indicator" in the DCI format described above). Specifically, the base station may select some of the configured rate matching resources to group them into a rate matching resource group, and indicate to the UE whether or not to rate-match the data channel for each rate matching resource group, through DCI in a bitmap manner. For example, in case that four rate matching resources, RMR #1, RMR #2, RMR #3, and RMR #4, are configured, the base station may configure RMG #1={RMR #1, RMR #2} and RMG #2={RMR #3, RMR #4} as rate matching groups and may indicate to the UE whether or not to rate-match the data channel in RMG #1 and RMG #2, respectively, through a bitmap using 2 bits in the DCI field. For example, the case that requires rate-matching may be indicated as "1", and the case that does not require rate-matching may be indicated as "0".

5G supports the granularity of an "RB symbol level" and an "RE level" as a method for configuring the above-described rate matching resources for the UE. More specifically, the following configuration method may be provided.

Physical Downlink Shared Channel (PDSCH)/ Physical Uplink Shared Channel (PUSCH): In Relation to Frequency Resource Allocation

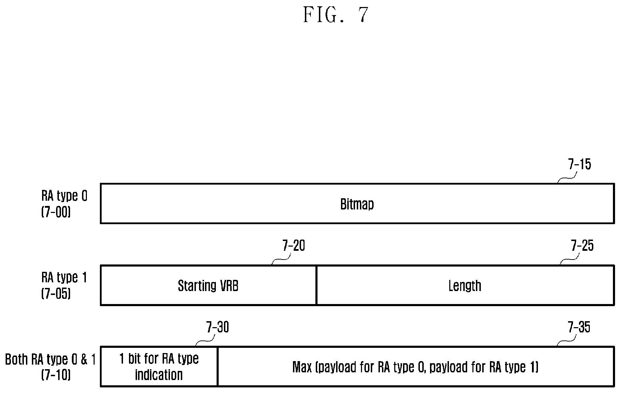

FIG. 7 is a diagram illustrating an example of allocating resources on a frequency domain of a physical downlink shared channel (PDSCH) or physical uplink shared channel (PUSCH) in a wireless communication system according to an embodiment of the disclosure.

FIG. 7 is a diagram showing three frequency domain resource assignment methods of type -0 (7-00), type-1 (7-05), and dynamic switch (7-10) that may be configured through a higher layer in an NR wireless communication system.

With reference to FIG. 7, in case that the UE is configured to use only resource type-0 through higher layer signaling (7-00), some downlink control information (DCI) for allocating a PDSCH/PUSCH to the corresponding UE includes a bitmap including $N_{RBG}$ bits. In this case, $N_{RBG}$ indicates the number of resource block groups (RBGs) determined as shown in Table 11 below according to a BWP size allocated by a BWP indicator and a higher layer parameter, rbg-Size, and data is transmitted in the RBG indicated as 1 by a bitmap.

[Table 11]

| Bandwidth Part Size | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

The size of BWP is the number of RBs that the BWP includes. More particularly, in case that type-0 resource allocation is indicated to the UE, the length of the frequency domain resource assignment (FDRA) field of the DCI received by the UE is equal to the number of RBGs ($N_{RBG}$), and is $N_{RBG} = \left\lceil (N_{BWP}^{size} + (N_{BWP}^{start} \bmod P))/P \right\rceil$. Here, the first RBG includes $\text{RBG}_0^{size} = P - \text{N}_{\text{BWP}}^{size} \bmod P$ RBs, and if the last RBG is $\left(\text{N}_{\text{BWP}}^{start} + \text{N}_{\text{BWP}}^{size}\right) \bmod P > 0$, $\text{RBG}_{last}^{size} = \left(\text{N}_{\text{BWP}}^{start} + \text{N}_{\text{BWP}}^{size}\right) \bmod P$ RBs are included otherwise, $\text{RBG}_{last}^{size} = \text{P}$ RBs are included. The other RBGs include P RBs. Here, P is the number of nominal RBGs determined according to Table 11. In case that the UE is configured to use only type-1 resource allocation through higher layer signaling (7-05), the DCI that allocates PDSCH/PUSCH to the corresponding UE includes frequency domain resource assignment information (FDRA) configured with $\left\lceil \log_2(N_{RB}^{BWP} * (N_{RB}^{BWP} + 1)/2 \right\rceil \text{bits}$. Here, $N_{RB}^{BWP}$ is the number of RBs included in the BWP. Through this, the base station may configure the starting VRB (7-20) and the length of frequency domain resources (7-25) allocated sequentially therefrom.

In case that the UE is configured to use both resource type-0 and resource type-1 through higher layer signaling (7-10), some DCI for allocating a PDSCH/PUSCH to the corresponding UE includes frequency domain resource assignment information configured with bits of a larger value 7-35 of a payload 7-15 for configuring resource allocation type-0 and payloads 7-20 and 7-25 for configuring resource allocation type-1. The conditions for this will be described later. In this case, one bit may be added to the foremost part (MSB) of the frequency domain resource assignment information in DCI, and in case that the corresponding bit has a value "0", it may indicate that resource allocation type-0 is used, and in case that the bit has a value "1", it may indicate that resource allocation type-1 is used.

Physical Downlink Shared Channel (PDSCH)/ Physical Uplink Shared Channel (PUSCH): In Relation to Time Resource Allocation

A time domain resource assignment method for a data channel in a next-generation mobile communication system (5G or NR system) will be described below.

The base station may configure a table for time domain resource assignment information on a downlink data channel (physical downlink shared channel (PDSCH)) and a uplink data channel (physical uplink shared channel (PUSCH)) for the UE using higher layer signaling (e.g., RRC signaling). A table formed as up to maxNrofDL-Allocations=16 entries may be configured for a PDSCH, and a table formed as up to maxNrofUL-Allocations=16 entries may be configured for a PUSCH. In an embodiment, the time domain resource assignment information may include PDCCH-to-PDSCH slot timing (corresponding to the time interval in slot units between the time at which a PDCCH is received and the time at which a PDSCH scheduled by the received PDCCH is transmitted, and denoted by K0), PDCCH-to-PUSCH slot timing (corresponding to the time interval in slot units between the time at which a PDCCH is received and the time at which a PUSCH scheduled by the received PDCCH is transmitted, and denoted by K2), information on the position and length of a start symbol in which the PDSCH or PUSCH is scheduled in the slot, a mapping type of a PDSCH or PUSCH, and the like. For example, information shown in Table 12 or Table 13 below may be transmitted from the base station to the UE.

【Table 12】

PDSCH-TimeDomainResourceAllocationList information element

PDSCH-TimeDomainResourceAllocationList ::= SEQUENCE (SIZE(1..maxNrofDL-Allocations)) OF
PDSCH-TimeDomainResourceAllocation

PDSCH-TimeDomainResourceAllocation ::= SEQUENCE {
    k0                               INTEGER (0..32)
                                        OPTIONAL, -- Need S
(PDCCH-TO-PDSCH timing, slot unit))
   mappingType                     ENUMERATED {typeA, typeB}
    (mapping type)
   startSymbolAndLength        INTEGER (0..127)

   (start symbol and length of PDSCH)
}

【Table 13】

| PUSCH-TimeDomainResourceAllocationList information element |
| --- |
| PUSCH-TimeDomainResourceAllocationList ::= SEQUENCE (SIZE(1..maxNrofDL-Allocations)) OF PUSCH-TimeDomainResourceAllocation<br><br>PUSCH-TimeDomainResourceAllocation ::= SEQUENCE {<br>　　k0　　　　　　　　　　　　　　　　INTEGER (0..32)<br>　　　　　　　　　　　　　　　　　　OPTIONAL, -- Need S<br>(PDCCH-TO-PUSCH timing, slot unit))<br>　　mappingType　　　　　　　　　　ENUMERATED {typeA, typeB}<br>　　　(mapping type)<br>　　startSymbolAndLength　　　　　　INTEGER (0..127)<br>　　　(start symbol and length of PUSCH)<br>} |

The base station may notify the UE of one of the entries in the table for the time domain resource assignment information described above through L1 signaling (e.g., DCI) (for example, it may be indicated by a field "time domain resource assignment" in DCI). The UE may obtain time domain resource assignment information for the PDSCH or PUSCH, based on the DCI received from the base station.

FIG. 8 is a diagram illustrating an example of time domain resource assignment of a PDSCH in a wireless communication system according to an embodiment of the disclosure.

With reference to FIG. 8, the base station may indicate the time domain location of a PDSCH resource according to the subcarrier spacing (SCS) ($\mu_{PDSCH}$ and $\mu_{PDCCH}$) of a data channel and a control channel configured using a higher layer, a scheduling offset value (K0), a starting position 8-00 of OFDM symbols within one slot dynamically indicated through DCI, and the length 8-05 thereof.

FIG. 9 is a diagram illustrating an example of time domain resource assignment depending on subcarrier spacing of a data channel and a control channel in a wireless communication system according to an embodiment of the disclosure.

With reference to FIG. 9, in case that the subcarrier spacing of the data channel is the same as the subcarrier spacing of the control channel (9-00, $\mu_{PDSCH}=\mu_{PDCCH}$), the slot numbers for the data and the control are the same, so the base station and UE may produce a scheduling offset according to a predetermined slot offset K0. On the other hand, in case that the subcarrier spacing of the data channel is different from the subcarrier spacing of the control channel (9-05, $\mu_{PDSCH}\neq\mu_{PDCCH}$), the slot numbers for the data and the control are different from each other, so the base station and UE may produce a scheduling offset according to a predetermined slot offset K0, based on the subcarrier spacing of the PDCCH.

Physical Uplink Shared Channel (PUSCH): In Relation to Transmission Scheme

Next, a scheduling scheme of PUSCH transmission is described. PUSCH transmission may be dynamically scheduled by a UL grant within DCI or may operate by configured grant Type 1 or Type 2. Dynamic scheduling of PUSCH transmission may be indicated by DCI format 0_0 or 0_1.

Configured grant Type 1 PUSCH transmission may be semi-statically configured through reception of configuredGrantConfig including rrc-ConfiguredUplinkGrant in Table 14 through higher layer signaling without reception of a UL grant within DCI. Configured grant Type 2 PUSCH transmission may be semi-persistently scheduled by a UL grant within DCI after reception of configuredGrantConfig which does not include rrc-ConfiguredUplinkGrant in Table 14 through higher layer signaling. In case that PUSCH transmission operates by a configured grant, parameters applied to PUSCH transmission are applied through configuredGrantConfig, which is higher layer signaling of Table 14, except for dataScramblingIdentityPUSCH, txConfig, codebookSubset, maxRank, and scaling of UCI-OnPUSCH provided as pusch-Config of Table 15, which is higher layer signaling. When the UE receives transformPrecoder within configured-GrantConfig, which is higher layer signaling of Table 14, the UE applies tp-pi2BPSK within pusch-Config of Table 15 to PUSCH transmission operating by the configured grant.

【Table 14】

| ConfiguredGrantConfig ::= | SEQUENCE { |
|---|---|
| frequencyHopping | ENUMERATED {intraSlot, interSlot} OPTIONAL, -- Need S, |
| cg-DMRS-Configuration | DMRS-UplinkConfig, |
| mcs-Table | ENUMERATED {qam256, qam64LowSE} OPTIONAL, -- Need S |
| mcs-TableTransformPrecoder | ENUMERATED {qam256, qam64LowSE} OPTIONAL, -- Need S |
| uci-OnPUSCH | SetupRelease { CG-UCI-OnPUSCH } OPTIONAL, -- Need M |
| resourceAllocation | ENUMERATED { resourceAllocationType0, resourceAllocationType1, dynamicSwitch }, |
| rbg-Size | ENUMERATED {config2} OPTIONAL, -- Need S |
| powerControlLoopToUse | ENUMERATED {n0, n1}, |
| p0-PUSCH-Alpha | P0-PUSCH-AlphaSetId, |
| transformPrecoder | ENUMERATED {enabled, disabled} OPTIONAL, -- Need S |
| nrofHARQ-Processes | INTEGER(1..16), |
| repK | ENUMERATED {n1, n2, n4, n8}, |
| repK-RV | ENUMERATED {s1-0231, s2-0303, s3-0000} OPTIONAL, -- Need R |

```
        periodicity                           ENUMERATED {

                                                    sym2,       sym7,       sym1x14,
sym2x14, sym4x14, sym5x14, sym8x14, sym10x14, sym16x14, sym20x14,

                                                    sym32x14,              sym40x14,
sym64x14, sym80x14, sym128x14, sym160x14, sym256x14, sym320x14, sym512x14,

                                                    sym640x14,         sym1024x14,
```

```
sym1280x14, sym2560x14, sym5120x14,

                                                    sym6,    sym1x12,    sym2x12,
sym4x12, sym5x12, sym8x12, sym10x12, sym16x12, sym20x12, sym32x12,

                                                    sym40x12,              sym64x12,
sym80x12, sym128x12, sym160x12, sym256x12, sym320x12, sym512x12, sym640x12,

                                                    sym1280x12, sym2560x12
        },
        configuredGrantTimer                              INTEGER   (1..64)
OPTIONAL,      -- Need R
        rrc-ConfiguredUplinkGrant              SEQUENCE {
            timeDomainOffset                      INTEGER (0..5119),
            timeDomainAllocation                  INTEGER   (0..15),
            frequencyDomainAllocation             BIT STRING (SIZE(18)),
            antennaPort                           INTEGER (0..31),
            dmrs-SeqInitialization                INTEGER (0..1)
```

```
OPTIONAL,      -- Need R

          precodingAndNumberOfLayers                    INTEGER (0..63),

          srs-ResourceIndicator                              INTEGER  (0..15)
OPTIONAL,      -- Need R

          mcsAndTBS                              INTEGER (0..31),

          frequencyHoppingOffset                              INTEGER  (1..
maxNrofPhysicalResourceBlocks-1)            OPTIONAL,     -- Need R

          pathlossReferenceIndex            INTEGER  (0..maxNrofPUSCH-
PathlossReferenceRSs-1),

          ...

     }
OPTIONAL,      -- Need R

     ...
```

Next, a PUSCH transmission method is described. A DMRS antenna port for PUSCH transmission is the same as an antenna port for SRS transmission. PUSCH transmission may follow each of a codebook-based transmission method and a non-codebook-based transmission method according to whether a value of txConfig within pusch-Config of Table 15, which is higher layer signaling, is 'codebook' or 'nonCodebook.'

As described above, PUSCH transmission may be dynamically scheduled through DCI format 0_0 or 0_1 or semi-statically configured by the configured grant. When the UE receives an indication of scheduling of PUSCH transmission through DCI format 0_0, the UE performs a beam configuration for PUSCH transmission by using pucch-spatialRelationInfoID corresponding to a UE-specific PUCCH resource corresponding to a minimum ID within the activated uplink BWP in the serving cell in which case the PUSCH transmission is based on a single antenna port. The UE does not expect scheduling of PUSCH transmission through DCI format 0_0 within a BWP in which the PUCCH resource including pucch-spatialRelationInfo is not configured. When the UE does not receive a configuration of txConfig within pusch-Config of Table 15, the UE does not expect reception of scheduling through DCI format 0_1.

**EP 4 601 231 A1**

【Table 15】

| PUSCH-Config ::= | SEQUENCE { |
|---|---|
| dataScramblingIdentityPUSCH | INTEGER (0..1023) OPTIONAL, -- Need S |
| txConfig | ENUMERATED {codebook, nonCodebook} OPTIONAL, -- Need S |
| dmrs-UplinkForPUSCH-MappingTypeA | SetupRelease { DMRS-UplinkConfig } OPTIONAL, -- Need M |
| dmrs-UplinkForPUSCH-MappingTypeB | SetupRelease { DMRS-UplinkConfig } OPTIONAL, -- Need M |
| pusch-PowerControl | PUSCH-PowerControl OPTIONAL, -- Need M |
| frequencyHopping | ENUMERATED {intraSlot, interSlot} OPTIONAL, -- Need S |
| frequencyHoppingOffsetLists | SEQUENCE (SIZE (1..4)) OF |

INTEGER (1.. maxNrofPhysicalResourceBlocks-1)

```
OPTIONAL,      -- Need M
        resourceAllocation                                    ENUMERATED
{ resourceAllocationType0, resourceAllocationType1, dynamicSwitch},
        pusch-TimeDomainAllocationList              SetupRelease  {  PUSCH-
TimeDomainResourceAllocationList }              OPTIONAL,      -- Need M
        pusch-AggregationFactor                    ENUMERATED  {  n2, n4, n8  }
OPTIONAL,      -- Need S
        mcs-Table                                   ENUMERATED  {qam256,
qam64LowSE}                                        OPTIONAL,      -- Need S
        mcs-TableTransformPrecoder                  ENUMERATED  {qam256,
qam64LowSE}                                        OPTIONAL,      -- Need S
        transformPrecoder                  ENUMERATED {enabled,  disabled}
OPTIONAL,      -- Need S
        codebookSubset                                        ENUMERATED
{fullyAndPartialAndNonCoherent, partialAndNonCoherent,nonCoherent}


OPTIONAL, -- Cond codebookBased
        maxRank                                         INTEGER  (1..4)
OPTIONAL, -- Cond codebookBased
        rbg-Size                                   ENUMERATED  {  config2}
OPTIONAL, -- Need S
        uci-OnPUSCH                         SetupRelease { UCI-OnPUSCH}
OPTIONAL, -- Need M
        tp-pi2BPSK                               ENUMERATED  {enabled}
OPTIONAL, -- Need S

        ...

}
```

Next, codebook-based PUSCH transmission is described. Codebook-based PUSCH transmission may be dynamically scheduled through DCI format 0_0 or 0_1 or semi-statically operate by the configured grant. When codebook-based PUSCH is dynamically scheduled by DCI format 0_1 or is semi-statically configured by the configured grant, the UE determines a precoder for PUSCH transmission on the basis of an SRS resource indicator (SRI), a transmission precoding matrix indicator (TPMI), and a transmission rank (the number of PUSCH transmission layers).

In this case, the SRI may be given through an SRS resource indicator field within DCI or may be configured through srs-ResourceIndicator which is higher layer signaling. In codebook-based PUSCH transmission, the UE may receive a configuration of at least one SRS resource and a maximum of two SRS resources. In case that the UE receives the SRI through DCI, the SRS resource indicated by the corresponding SRI is the SRS resource corresponding to the SRI among SRS resources transmitted earlier than the PDCCH including the corresponding SRI. Further, the TPMI and the transmission rank may be given through precoding information and number of layers fields within DCI or may be configured through precodingAndNumberOfLayers which is higher layer signaling. The TPMI is used to indicate a precoder applied to PUSCH transmission. When the UE receive a configuration of one SRS resource, the TPMI is used to indicate a precoder to be applied to the one configured SRS resource. When the UE receive a configuration of a plurality of SRS resources, the TPMI is used to indicate a precoder to be applied to SRS resources indicated through the SRI.

The precoder to be used for PUSCH transmission is selected from an uplink codebook having the number of antenna ports which is the same as a value of nrofSRS-Ports within SRS-Config which is higher layer signaling. In codebook-based PUSCH transmission, the UE determines a codebook subset on the basis of the TPMI and a codebookSubset within pusch-Config which is higher layer signaling. The codebookSubset within pusch-Config, which is higher layer signaling, may be configured as one of 'fullyAndPartialAndNonCoherent,' 'partialAndNonCoherent,' and 'nonCoherent' on the basis of the UE capability that the UE reports to the base station. When the UE reports 'partialAndNonCoherent' as the UE capability, the UE does not expect a configuration of the value of the codebookSubset, which is higher layer signaling, as 'fullyAndPartialAndNonCoherent.' Further, when the UE reports 'nonCoherent' as the UE capability, the UE does not expect a configuration of the value of the codebookSubset, which is higher layer signaling, as 'fullyAndPartialAndNonCoherent' or 'partialAndNonCoherent.' In case that nrofSRS-Ports within SRS-ResourceSet, which is higher layer signaling, indicate two SRS antenna ports, the UE does not expect a configuration of the value of the codebookSubset, which is higher layer signaling, as 'partialAndNonCoherent.'

The UE may receive a configuration of one SRS resource set having a value of usage within SRS-ResourceSet, which is higher layer signaling, configured as 'codebook,' and one SRS resource may be indicated through the SRI within the corresponding SRS resource set. When several SRS resources are configured within the SRS resource set having the value of usage within SRS-ResourceSet, which is higher layer signaling, configured as 'codebook,' the UE expects a configuration of the same value of nrofSRS-Ports within the SRS-Resource, which is higher layer signaling, for all SRS resources.

The UE may transmit one or a plurality of SRS resources included in the SRS resource set having the value of usage configured as 'codebook' to the base station according to higher layer signaling, and the base station may select one of the SRS resources transmitted by the UE and indicate the UE to perform PUSCH transmission by using transmission beam information of the corresponding SRS resource. In this case, in codebook-based PUSCH transmission, the SRI is used as information for selecting an index of one SRS resource and is included in DCI. In addition, the base station may include information indicating the TPMI and the rank to be used for PUSCH transmission by the UE into DCI. The UE performs PUSCH transmission by applying a precoder indicated by the rank and the TPMI indicated on the basis of the transmission beam of the corresponding SRS resource using the SRS resource indicated by the SRI.

Next, non-codebook-based PUSCH transmission is described. Non-codebook-based PUSCH transmission may be dynamically scheduled through DCI format 0_0 or 0_1 or semi-statically operate by the configured grant. In case that at least one SRS resource is configured within the SRS resource set having the value of usage configured as 'nonCodebook' within SRS-ResourceSet, which is higher layer signaling, the UE may receive scheduling of non-codebook-based PUSCH transmission through DCI format 0_1.

For the SRS resource set having the value of usage configured as 'nonCodebook' within SRS-ResourceSet which is higher layer signaling, the UE may be configured to one connected non-zero power CSI-RS resource (NZP CSI-RS). The UE may calculate a precoder for SRS transmission through measurement for the NZP CSI-RS resource connected to the SRS resource set. When a difference between the last reception symbol of the aperiodic NZP CSI-RS resource connected to the SRS resource set and the first symbol of aperiodic SRS transmission in the UE is smaller than 42 symbols, the UE does not expect an update of information on the precoder for SRS transmission.

When the value of resource Type within SRS-ResourceSet, which is higher layer signaling, is configured as 'aperiodic,' the connected NZP CSI-RS is indicated by an SRS request which is a field within DCI format 0_1 or 1_1. In this case, when the connected NZP CSI-RS resource is an aperiodic NZP CSI-RS resource, the case in which the value of the SRS request field within DCI format 0_1 or 1_1 is not '00' indicates the existence of the connected NZP CSI-RS. In this case, the corresponding DCI must not indicate cross carrier or cross BWP scheduling. Further, when the value of the SRS request indicates the existence of the NZP CSI-RS, the corresponding NZP CSI-RS is located in a slot in which the PDCCH including the SRS request field is transmitted. In this case, TCI states configured in the scheduled subcarrier are not configured as QCL-TypeD.

When the periodic or semi-persistent SRS resource set is configured, the connected NZP CSI-RS may be indicated through an associatedCSI-RS within SRS-ResourceSet which is higher layer signaling. For non-codebook-based transmission, the UE does not expect configurations of both spatialRelationInfo which is higher layer signaling for the SRS resource and associatedCSI-RS within SRS-ResourceSet which is higher layer signaling.

In case that the UE is configured with a plurality of SRS resources, the UE may determine a precoder and a transmission rank to be applied to PUSCH transmission on the basis of an SRI indicated by the base station. In this case, the SRI may be indicated through an SRS resource indicator field within DCI or may be configured through srs-ResourceIndicator which is higher layer signaling. Like the codebook-based PUSCH transmission, in case that the UE receives the SRI through DCI, the SRS resource indicated by the corresponding SRI is the SRS resource corresponding to the SRI among SRS resources transmitted earlier than the PDCCH including the corresponding SRI. The UE may use one or a plurality of SRS resources for SRS transmission, and the maximum number of SRS resources which may be simultaneously transmitted in the same symbol within one SRS resource set are determined by the UE capability which the UE reports to the base station. In this case, SRS resources which the UE simultaneously transmits occupy the same RB. The UE configures one SRS port for each SRS resource. The number of SRS resource sets having the value of usage configured as 'nonCodebook' within SRS-ResourceSet, which is higher layer signaling, may be configured to only one, and the number of SRS resources for non-codebook-based PUSCH transmission may be configured up to 4.

The base station transmits one NZP-CSI-RS connected to the SRS resource set, and the UE calculates a precoder to be used for one or a plurality of SRS resource transmissions within the corresponding SRS resource set on the basis of the measurement result when the corresponding NZP-CSI-RS is received. When transmitting one or a plurality of SRS resources within the SRS resource set having usage configured as 'nonCodebook' to the base station, the UE applies the calculated precoder and the base station selects one or a plurality of SRS resources from among the one or plurality of received SRS resources. Here, in non-codebook-based PUSCH transmission, the SRI indicates an index which may express one SRS resource or a combination of a plurality of SRS resources, and the SRI is included in the DCI. Here, the number of SRS resources indicated by the SRI transmitted by the base station may be the number of transmission layers of the PUSCH, and the UE transmits the PUSCH by applying the precoder applied to SRS resources transmission to each layer.

Related to Carrier Aggregation (CA)/Dual Connectivity (DC)

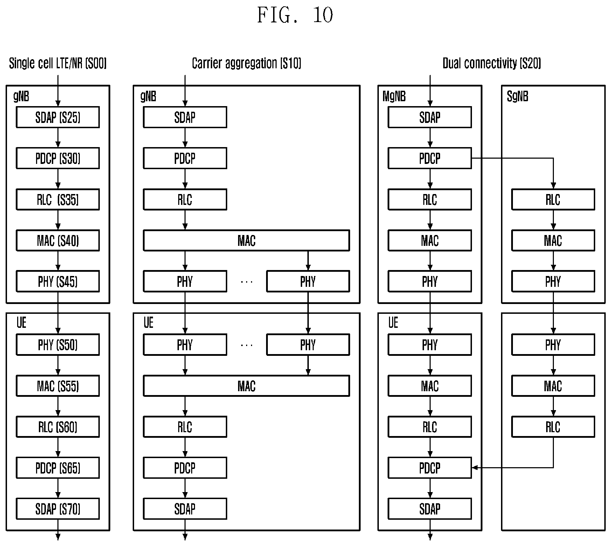

FIG. 10 is a diagram illustrating a wireless protocol structure of a base station and UE in a situation of single cell, carrier aggregation, and dual connectivity according to an embodiment of the disclosure.

With reference to FIG. 10, in a wireless protocol of the next-generation mobile communication system, the UE and the NR base station include NR service data adaptation protocols (SDAPs) S25 and S70, NR packet data convergence protocols (PDCPs) S30 and S65, NR radio link controls (RLCs) S35 and S60, and NR medium access controls (MACs) S40 and S55, respectively.

Main functions of the NR SDAPs S25 and S70 may include some of the following functions.

- User data transfer function (transfer of user plane data)
- Function of mapping QoS flow and a data bearer for uplink and downlink (mapping between a QoS flow and a DRB for both DL and UL)
- Function of marking a QoS flow ID for uplink and downlink (marking QoS flow ID in both DL and UL packets)
- Function of mapping reflective QoS flow to a data bearer for uplink SDAP PDUs (reflective QoS flow to DRB mapping for the UL SDAP PDUs).

With respect to the SDAP layer entity, the UE may be configured as to whether to use a header of the SDAP layer entity or a function of the SDAP layer entity for each PDCP layer entity, each bearer, or each logical channel through an RRC message. In case that the SDAP header is configured, a 1-bit indicator of NAS reflective QoS of the SDAP header and a 1 bit-indicator of AS reflective QoS may indicate that the UE updates or reconfigures information on mapping of QoS flow and a data bearer in uplink and downlink. The SDAP header may include QoS flow ID information indicating the QoS. The QoS information may be used as data-processing-priority, scheduling information, etc., to support a seamless service.

Main functions of the NR PDCPs S30 and S65 may include some of the following functions.

- Header compression and decompression function (Header compression and decompression: ROHC only)
- User data transmission function (Transfer of user data)
- Sequential delivery function (In-sequence delivery of upper layer PDUs)
- Non-sequential delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU discard function (Timer-based SDU discard in uplink.)

The reordering function of the NR PDCP entity is a function of sequentially reordering PDCP PDUs received by a lower layer on the basis of a PDCP sequence number (SN), and may include a function of sequentially transferring the reordered data to a higher layer. Alternatively, the reordering function of the NR PDCP entity may include a function of directly transferring data regardless of the sequence, a function of recording PDCP PDUs lost due to the reordering, a function of reporting statuses of the lost PDCP PDUs to a transmission side, and a function of making a request for retransmitting the lost PDCP PDUs.

Main functions of the NR RLCs S35 and S60 may include some of the following functions.

- Data transmission function (Transfer of upper layer PDUs)
- Sequential delivery function (In-sequence delivery of upper layer PDUs)
- Non-sequential delivery function (Out-of-sequence delivery of upper layer PDUs)
- ARQ function (Error Correction through ARQ)
- Concatenation, segmentation, and reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU discard function (RLC SDU discard)
- RLC reestablishment function (RLC re-establishment)

The sequential delivery function (in-sequence delivery) of the NR RLC entity is a function of sequentially delivering RLC SDUs received from a lower layer to the higher layer. In case that one original RLC SDU is divided into a plurality of RLC SDUs and then received, the sequential delivery function (In-sequence delivery) of the NR RLC entity may include a function of reassembling and delivering the RLC SDUs, a function of reordering the received RLC PDUs on the basis of an RLC sequence number (SN) or a PDCP sequence number (SN), a function of recording RLC PDUs lost due to the reordering, a function of reporting statuses of the lost RLC PDUs to a transmission side, and a function of making a request for retransmitting the lost RLC PDUs. In case that there are lost RLC SDUs, the sequential delivery function (In-sequence delivery) of the NR RLC entity may include a function of sequentially delivering only RLC SDUs preceding the lost RLC SDUs to the higher layer or a function of, if a predetermined timer expires even though there are lost RLC SDUs, sequentially delivering all RLC SDUs received before the timer starts to the higher layer. Alternatively, the sequential delivery function (in-sequence delivery) of the NR RLC entity may include a function of, if a predetermined timer expires even though there are lost RLC SDUs, sequentially delivering all RLC SDUs received up to now to the higher layer. Further, the NR RLC entity may process the RLC PDUs sequentially in the order of reception thereof (according to an arrival order regardless of a serial number or a sequence number) and may deliver the RLC PDUs to the PDCP entity regardless of the sequence thereof (out-of-sequence delivery). In the case of segments, the NR RLC entity may receive segments that are stored in the buffer or are to be received in the future, reconstitute the segments to be one RLC PDU, process the RLC PDU, and then deliver the same to the PDCP entity. The NR RLC layer may not include a concatenation function, and the function may be performed by the NR MAC layer, or may be replaced with a multiplexing function of the NR MAC layer.

The non-sequential delivery function (Out-of-sequence delivery) of the NR RLC entity is a function of delivering RLC SDUs received from a lower layer directly to a higher layer regardless of the sequence of the RLC SDUs, and may include, in case that one original RLC SDU is divided into a plurality of RLC SDUs and then received, a function of reassembling and delivering the RLC PDUs and a function of storing RLC SNs or PDCP SNs of the received RLC PDUs, reordering the RLC PDUs, and recording lost RLC PDUs.

The NR MACs S40 and S55 may be connected to multiple NR RLC layer entities configured in one UE and main functions of the NR MAC may include some of the following functions.

- Mapping function (Mapping between logical channels and transport channels)
- Multiplexing and demultiplexing function (Multiplexing/demultiplexing of MAC SDUs)
- Scheduling information report function (Scheduling information reporting)
- HARQ function (Error correction through HARQ)
- Priority handling function between logical channels (Priority handling between logical channels of one UE)
- Priority handling function between UEs (Priority handling between UEs by means of dynamic scheduling)
- MBMS service identification function (MBMS service identification)
- Transport format selection function (Transport format selection)
- Padding function (Padding)

The NR PHY layers S45 and S50 may perform an operation for channel-coding and modulating higher layer data to generate an OFDM symbol and transmitting the OFDM symbol through a radio channel or demodulating and channel-decoding the OFDM symbol received through the radio channel and delivering the demodulated and channel-decoded OFDM symbol to the higher layer.

A detailed structure of the wireless protocol structure may be variously changed according to a carrier (or cell) operation scheme. For example, in case that the base station transmits data to the UE on the basis of a single carrier (or cell), the base station and UE use a protocol structure having a single structure for each layer as indicated by reference numeral S00. On the other hand, in case that the base station transmits data to the UE on the basis of carrier aggregation (CA) using multiple carriers in a single TRP, the base station and UE use a protocol structure in which layers up to RLC have a single structure but the PHY layer is multiplexed through the MAC layer as indicated by reference numeral S10. In another example, in case that the base station transmits data to the UE on the basis of dual connectivity (DC) using multiple carriers in multiple TRPs, the base station and UE use a protocol structure in which layers up to RLC have a single structure but the PHY layer is multiplexed through the MAC layer as indicated by reference numeral S20.

Hereinafter, embodiments of the disclosure are described in detail along with the accompanying drawings. The content in the disclosure may be applied to FDD and TDD systems. Hereinafter, in the disclosure, higher signaling (or higher layer signaling) may be a method for transferring a signal from the base station to the UE through a downlink data channel of a physical layer or from the UE to the base station through an uplink data channel of a physical layer, and may also be referred to as RRC signaling, PDCP signaling, or a medium access control (MAC) control element (CE) (MAC CE).

Hereinafter, in the disclosure, when determining whether to apply cooperative communication, the UE may use various methods by which PDCCH(s) allocating PDSCHs to which cooperative communication is applied have specific formats, PDCCH(s) allocating PDSCHs to which cooperative communication is applied include a specific indicator informing of whether cooperative communication is applied, PDCCH(s) allocating PDSCHs to which cooperative communication is applied are scrambled by a specific RNTI, or the application of cooperative communication to a specific section indicated by a higher layer is assumed. Thereafter, for convenience of description, reception of, by the UE, a PDSCH to which cooperative communication is applied on the basis of conditions similar to the above conditions is referred to as an NC-JT case.

Hereinafter, determining priorities of A and B in the disclosure may be variously expressed as selecting one having a higher priority according to a predetermined priority rule and performing an operation corresponding thereto or omitting (or dropping) an operation for one having a lower priority.

Hereinafter, the disclosure describes the examples through a plurality of embodiments but the examples are not independent, and one or more embodiments can be simultaneously or complexly applied.

In the following description of the disclosure, higher layer signaling may be singling corresponding to at least one of or a combination of one or more of the following signaling.

- Master Information Block (MIB)
- System Information Block (SIB) or SIB X (X=1, 2, ...)
- Radio Resource Control (RRC)
- Medium Access Control (MAC) Control Element (CE)

Further, L1 signaling may be signaling corresponding to at least one of or a combination of one or more of signaling methods using the following physical layer channels or signaling.

- Physical Downlink Control Channel (PDCCH)
- Downlink Control Information (DCI)
- UE-specific DCI
- Group common DCI
- Common DCI
- Scheduling DCI (for example, DCI used for the purpose of scheduling downlink or uplink data)
- Non-scheduling DCI (for example, DCI other than DCI used for the purpose of scheduling downlink or uplink data)
- Physical Uplink Control Channel (PUCCH)
- Uplink Control Information (UCI)

Related to Subband Non-Overlapping Full Duplex (SBFD)

Meanwhile, in 3GPP, Subband non-overlapping Full Duplex (SBFD) has been discussed as a new duplex scheme based on new readio (NR). SBFD is a technology which, in a time division duplex (TDD) band (spectrum) of 6 GHz or lower frequency or 6 GHz or higher frequency, may receive, from a UE, as much UL transmission as a UL resource increased by utilizing some of a DL resource as a UL resource, may extend UL coverage of the UE, and may receive, from the UE, feedback with respect to DL transmission in the extended UL resource, so as to reduce a feedback delay. In the disclosure, a UE that is capable of receiving, from a base station, information associated with whether SBFD is supported, and performing UL transmission in a part of a DL resource may be referred to as an SBFD UE (SBFD-capable UE). To define the SBFD scheme in the standard, and to enable an SBFD UE to determine that the SBFD is supported in a specific cell (or frequency, frequency band), the following scheme may be considered.

In a first scheme, in addition to an existing frame structure type of an unpaired spectrum (or time division duplex (TDD)) or a paired spectrum (or frequency division duplex (FDD)), another frequency structure type (e.g., frame structure type 2) may be introduced to define the SBFD. Fame structure type 2 may define that SBFD is supported in the specific frequency or frequency band, or a base station may indicate whether SBFD is supported to a UE via system information. An SBFD UE may receive system information including whether the SBFD is supported and may determine whether SBFD is supported in the specific cell (or frequency, frequency band).

In a second scheme, without defining a new frame structure type, whether the SBFD is additionally supported in a specific frequency or frequency band of an existing unpaired spectrum (or TDD) may be indicated. In the second scheme, whether the SBFD is additionally supported in a specific frequency or frequency band of an existing unpaired spectrum may be defined, or a base station may indicate whether SBFD is supported to a UE via system information. An SBFD UE may receive system information including whether the SBFD is supported and may determine whether SBFD is supported in the specific cell (or frequency, frequency band).

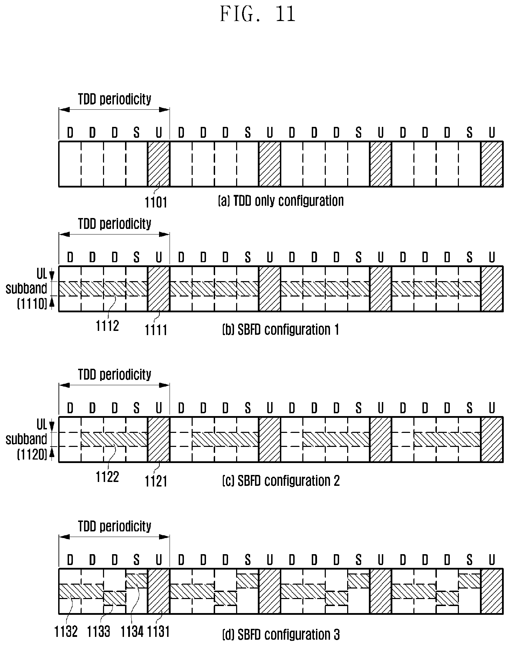

In the first and second schemes, information associated with whether SBFD is supported may be information (e.g., SBFD resource configuration information to be described in FIG. 11) indirectly indicating whether SBFD is supported by configuring a part of a DL resource as a UL resource, or may be information directly indicating whether SBFD is supported, in addition to a configuration associated with TDD uplink (UL)-downlink (DL) resource configuration information indicating a DL slot (or symbol) resource and UL slot (or symbol) resource of TDD.

In the disclosure, the SBFD UE may receive a synchronization signal block and may obtain cell synchronization at an initial cell access for accessing a cell (or base station). The process of obtaining the cell synchronization may be identical between an SBFD UE and an existing TDD UE. Thereafter, the SBFD UE may determine whether the cell supports SBFD by obtaining an MIB or SIB or via a random access process.

System information to transmit information associated with whether the SBFD is supported may be system information that is distinguished from system information for a UE (e.g., an existing TDD UE) that supports a different version of standard in the cell, and is transmitted separately. The SBFD UE may obtain the whole or part of the system information that is separately transmitted from the system information of the existing TDD UE, and may determine whether SBFD is supported. In case that the SBFD UE obtains only system information for the existing TDD UE or obtains system information indicating that SBFD is not supported, the SBFD UE may determine that the cell (or base station) supports only TDD.

In case that information associated with whether SBFD is supported is included in system information for a UE (e.g., an existing TDD UE) that supports a different version of standard, the information associated with whether the SBFD is supported may be inserted into the last portion of the system information so as not to affect obtaining of the system information of the existing TDD UE. In case that the SBFD UE fails to obtain information associated with whether SBFD is supported, which is inserted into the last portion, or obtains information indicating that SBFD is not supported, the SBFD UE may determine that the cell (or base station) supports only TDD.

In case that information associated with whether SBFD is supported is included in system information for a UE (e.g., an existing TDD UE) that supports a different version of standard, the information associated with whether the SBFD is supported may be transmitted via a separate PDSCH so as not to affect obtaining of the system information of the existing TDD UE. That is, a UE that does not support SBFD may receive a first SIB (or SIB1) including existing TDD-related system information via a first PDSCH. A UE that supports SBFD may receive a first SIB (or SIB) including existing TDD-related system information via a first PDSCH, and may receive a second SIB including SBFD-related system information via a second PDSCH. Here, the first PDSCH and the second PDSCH may be scheduled via a first PDCCH and a second PDCCH, respectively, and cyclic redundancy codes (CRCs) of the first PDCCH and the second PDCCH may be scrambled by the same RNTI (e.g., SI-RNTI). A search space for monitoring the second PDCCH may be obtained from the system information of the first PDSCH, but if it cannot be obtained (i.e., if the system information of the first PDSCH does not include information associated with the search space), the UE may receive the second PDCCH in a search space that is the same as the search space of the first PDCCH.

In case that the SBFD UE determines that the cell (or base station) supports only TDD, the SBFD UE may perform a random access procedure and data/control signal transmission or reception in the same manner as that of the existing TDD UE.

The base station may configure a random access resource separately for each of an existing TDD UE or an SBFD UE (e.g., an SBFD UE that supports duplex communication and an SBFD UE that supports half-duplex communication), and may transmit the configuration information (control information or configuration information indicating a time-frequency resource usable for a PRACH) of the random access resource to the SBFD UE through system information. The system information to transmit information associated with the random access resource may be system information that is distinguished from system information for a UE (e.g., an existing TDD UE) that supports a different version of standard in the cell, and is transmitted separately.

The base station configures random access resources separately for the SBFD UE and the TDD UE that supports a different version of standard, and may distinguish whether the TDD UE that supports the different version of standard performs random access or the SBFD UE performs random access. For example, the random access resource separately configured for the SBFD UE may be a resource that the existing TDD UE determines as a DL time resource, and the SBFD UE may perform random access through a UL resource (or a separate random access resource) configured in a part of the frequency of the DL time resource and the base station may determine that a UE that has attempted random access in the UL resource is the SBFD UE.

Alternatively, the base station may not configure a random access resource separately for the SBFD UE, but may configure a random access resource in common for all UEs in a cell. In this case, configuration information for the random access resource may be transmitted to all UEs in the cell through system information, and an SBFD UE that has received the system information may perform random access in the random access resource. Subsequently, the SBFD UE may complete the random access process and may proceed with an RRC connection mode for performing data transmission or reception with a cell. After RRC connection mode, the SBFD UE may receive, from the base station, a higher or physical signal that enables determining that a part of the frequency resource of the DL time resource is configured as a UL resource, and may perform a SBFD operation, for example, transmission of a UL signal in the UL resource.

In case that the SBFD UE determines that the cell supports SBFD, the SBFD UE may inform the base station that a UE that attempts accessing is an SBFD UE by transmitting, to the base station, capability information including at least one piece of information among information associated with whether the UE supports SBFD, information associated with whether full-duplex communication or half-duplex communication is supported, the number of transmission or reception antennas that the UE is equipped with (or supports). Alternatively, in case that supporting half-duplex communication is essential for the SBFD UE, whether the half-duplex communication is supported may be omitted from the capability information. The reporting of the capability information by the SBFD UE may be reported to the base station through a random access process, may be reported to the base station after the random access process is completed, or may be reported to the base station after RRC access mode for data transmission or reception with a cell is performed.

The SBFD UE may support half-duplex communication that performs only UL transmission or DL reception at one instance in the same manner as the existing TDD UE or may support full-duplex communication that performs both UL transmission and DL reception at one instance. Therefore, whether half-duplex communication or full-duplex communication is supported may be reported by the SBFD UE to the base station through capability reporting, and after reporting, the base station may configure, for the SBFD UE, whether the half-duplex communication or the full-duplex communication is to be used when the SBFD UE performs transmission or reception. In case that the SBFD UE reports, to the base station, capability associated with the half-duplex communication, a switching gap for changing an RF between transmission and reception may be needed in case that operation is performed in FDD or TDD, since a duplexer is not present in general.

FIG. 11 is a diagram illustrating an example in which SBFD is operated in a TDD band of a wireless communication system according to an embodiment.

FIG. 11(A) illustrates a case where TDD is operated in a specific frequency band. Based on a configuration associated with TDD UL-DL resource configuration information indicating a DL slot (or symbol) resource and a UL slot (or symbol) resource of TDD, a base station in a cell that operates TDD may transmit or receive a signal including data/control information with an existing TDD UE or an SBFD UE in a DL slot (or symbol), a UL slot (or symbol) 1101, or a flexible slot (or symbol).

Meanwhile, in FIG. 11, it is assumed that a DDDSU slot format is configured based on TDD UL-DL resource configuration information. Here, 'D' denotes a slot composed of all DL symbols, 'U' denotes a slot composed of all UL symbols, 'S' is a slot that is not the 'D' or 'U', that is, a slot including a DL symbol or a UL symbol or including a flexible symbol. For ease of description, it is assumed that S is composed of 12 DL symbols and 2 flexible symbols. Further, a DDDSU slot format may be repeated according to TDD UL-DL resource configuration information. That is, a repetition cycle of a TDD configuration may be 5 slots (5 ms in the case of 15 kHz SCS, 2.5 ms in the case of 30 kHz SCS, and the like).

Next, FIG. 11(B), 11(C) or 11(D) illustrates a case where SBFD is operated together with TDD in a specific frequency band.

With reference to FIG. 11(B), a UE may be configured to a part of the frequency band of a cell as a frequency band 1110 in which UL transmission is available. This band may be referred to as a UL subband. Further, the UL subband may be applied to all symbols of all slots. The UE may transmit a UL channel or signal scheduled in all symbols 1112 within the UL subband. However, the UE may not transmit a UL channel or signal in a band other than the UL subband. Additionally, the UE may transmit a UL channel or signal in a UL slot (or symbol) 1111.

With reference to FIG. 11(C), a UE may be configured to a part of the frequency band of a cell as a frequency band 1120 in which UL transmission is available, and configured to a time domain in which the frequency band is activated. Here, this frequency band may be referred to as a UL subband. In FIG. 11(C), a UL subband may be deactivated in a first slot, and a UL subband may be activated in the remaining slots. Therefore, the UE may transmit a UL channel or signal in a UL subband 1122 in the remaining slots. That is, although a UL subband is activated in units of slots, whether to activate/deactivate a UL subband may be configured in a unit of a symbol. Additionally, the UE may transmit a UL channel or signal in a UL slot (or symbol) 1121.

With reference to FIG. 11(D), a UE may be configured to a time-frequency resource in which UL transmission is available. The UE may be configured with one or more pieces of time-frequency resources as a time-frequency resource in which UL transmission is available. For example, a partial frequency band 1132 of a first slot and second slot may be configured as a time-frequency resource in which UL transmission is available. In addition, a partial frequency band 1133 of a third slot and a partial frequency band 1134 of a fourth slot may be configured as a time-frequency resource in which UL transmission is available. Additionally, the UE may transmit a UL channel or signal in a UL slot (or symbol) 1131.

In the following description, a time-frequency resource in which UL transmission is available in a DL symbol or slot may be referred to as an SBFD resource. Further, a symbol in which a UL subband is configured in DL symbols may be referred to as an SBFD symbol. In addition, a time-frequency resource in which DL reception is available in a UL symbol or slot may be referred to as an SBFD resource. Further, a symbol in which a DL subband is configured in UL symbols may be referred to as an SBFD symbol.

In the disclosure, for ease of description, a band that excludes a UL subband, and in which a DL channel or signal is capable of being received may be expressed as a DL subband. For the UE, a maximum of a single UL subband may be configurable and a maximum of two DL subbands may be configurable in a single symbol. For example, the UE may be configured with one of {UL subband and DL subband}, {DL subband and UL subband}, and {first DL subband, UL subband, and second DL subband}, in the frequency domain.

Hereinafter, unless otherwise specified in the description of the disclosure, the overlapping of the PDSCH scheduling region with the UL subband may include overlapping in the time-frequency domain (i.e., a case where the PDSCH is scheduled in the same RB of the same symbol and the UL subband is configured) and overlapping in the time domain (i.e., a case where the PDSCH is scheduled in the same symbol and the UL subband is configured, and the PDSCH scheduling and the UL subband configuration may or may not overlap in the frequency domain).

Embodiment 1. Method for determining a location of a first demodulation reference signal (DMRS) in case that a physical downlink shared channel (PDSCH) scheduling region overlaps with an uplink (UL) subband (or a method for determining a location of a first DMRS in case that a physical uplink shared channel (PUSCH) scheduling region overlaps with a downlink (DL) subband)

Embodiment 1 of the disclosure is a method for determining the location of the first DMRS in case that a PDSCH scheduling region overlaps with a UL subband.

A UE may be indicated with a PDSCH scheduling region from a DCI format. Here, time domain allocation information of the PDSCH may be indicated through a time domain resource assignment (TDRA) field of the DCI format, and frequency domain allocation information may be indicated through a frequency domain resource assignment (FDRA) field of the DCI format.

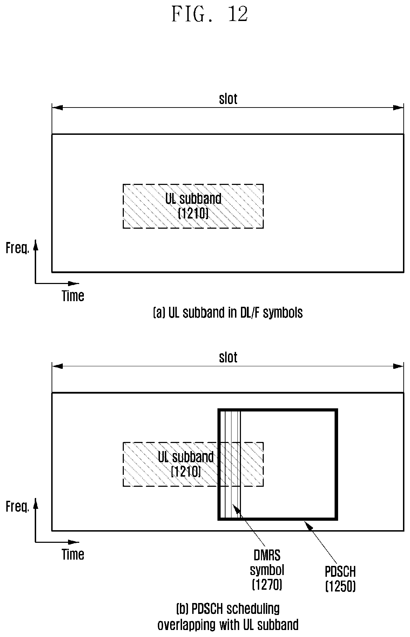

FIG. 12 is a diagram illustrating UL subband configuration and physical downlink shared channel (PDSCH) scheduling in a slot according to an embodiment of the disclosure.

A UE may be configured with a UL subband for a DL symbol or a flexible symbol from a higher layer signal. With reference to FIG. 12(A), a UE may be configured with which symbol each symbol is (e.g., whether it is a DL symbol, a UL symbol, or a flexible symbol) from a higher layer signal. In this case, some frequency bands in a DL symbol or a flexible symbol may be configured as UL subband 1210 for UL transmission. In the following description, a UL subband refers to a time (symbol)-frequency (Resource Block, RB) resource in which a UL subband is configured.

A UE may identify the location of a symbol in which a first DMRS of a scheduled PDSCH is transmitted. Here, it may be assumed that PDSCH mapping type B. In case of PDSCH mapping type B, the location of the first DMRS may be the earliest symbol among the symbols for which the PDSCH is scheduled. In the following description, the 'nominal first DMRS symbol' refers to a symbol for which the first DMRS is received in case that no special UE operation is defined, and may refer to the first symbol of the PDSCH unless otherwise specified. The 'actual first DMRS symbol' may refer to a symbol for which the UE actually receives the first DMRS based on the UE operation according to the disclosure.

With reference to FIG. 12(B), the UE may be configured with the UL subband 1210 in a nominal first DMRS symbol 1270 of a scheduled PDSCH 1250. In this case, the UL subband may overlap with the frequency (RB) resource for which the PDSCH is scheduled in the nominal first DMRS symbol. In case that the nominal first DMRS symbol and the UL subband overlap, the UE cannot receive the first DMRS in the nominal first DMRS symbol. This is because the nominal first DMRS overlaps with the UL subband in some frequency bands. Therefore, the UE needs to determine the actual first DMRS symbol for receiving the first DMRS in a symbol other than the nominal first DMRS symbol.

In case that the PUSCH scheduling region overlaps with the DL subband, the first DMRS location needs to be determined. The UE may be indicated with the PUSCH scheduling region from the DCI format. Here, the time domain allocation information of the PUSCH may be indicated through the time domain resource assignment (TDRA) field of the DCI format, and the frequency domain allocation information may be indicated through the frequency domain resource assignment (FDRA) field of the DCI format.

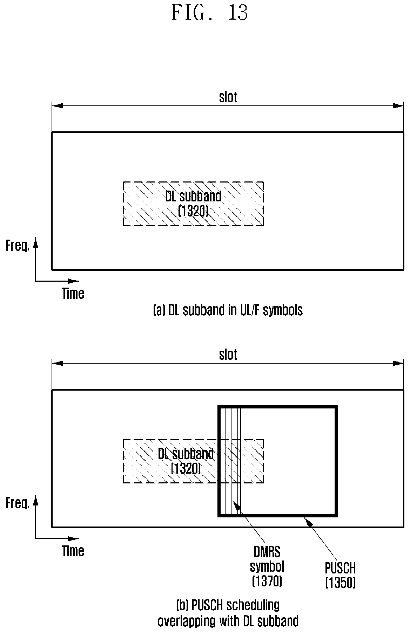

FIG. 13 is a diagram illustrating DL subband configuration and PUSCH scheduling in a slot according to an embodiment of the disclosure.

A UE may be configured with a DL subband in a UL symbol or flexible symbol from a higher layer signal. With reference to FIG. 13(A), a UE may be configured with which symbol each symbol is (e.g., whether it is a DL symbol, a UL symbol, or a flexible symbol) from a higher layer signal. In this case, some frequency bands in a UL symbol or a flexible symbol may be configured as DL subband 1320 for DL transmission. In the following description, a DL subband refers to a time (symbol)-frequency (Resource Block, RB) resource in which a DL subband is configured.

A UE may identify the location of a symbol in which a first DMRS of a scheduled PUSCH is transmitted. Here, it may be assumed that PUSCH mapping type B. In case of PDSCH mapping type B, the location of the first DMRS may be the earliest symbol among the symbols for which the PUSCH is scheduled. In the following description, the 'nominal first DMRS symbol' refers to a symbol for which the first DMRS is transmitted in case that no special UE operation is defined, and may refer to the first symbol of the PUSCH unless otherwise specified. The 'actual first DMRS symbol' may refer to a symbol for which the UE actually transmits the first DMRS based on the UE operation according to the disclosure.

With reference to FIG. 13(B), the UE may be configured with the DL subband 1320 in a nominal first DMRS symbol 1370 of a scheduled PUSCH 1350. In this case, the DL subband may overlap with the frequency (resource block, RB) resource for which the PUSCH is scheduled in the nominal first DMRS symbol. In case that the nominal first DMRS symbol and the DL subband overlap, the UE cannot transmit the first DMRS in the nominal first DMRS symbol. This is because the nominal first DMRS overlaps with the DL subband in some frequency bands. Therefore, the UE needs to determine the actual first DMRS symbol for transmitting the first DMRS in a symbol other than the nominal first DMRS symbol.

Hereinafter, the description will be made based on a case where the UE receives the PDSCH. However, the embodiments of the disclosure are not limited to the disclosed embodiments, and a problem that may occur in case that the UE receives the PDSCH may similarly occur in case that the UE transmits the PUSCH. Therefore, the description below may also be applied to the case where the UE transmits the PUSCH. If the description below is applied to the PUSCH, the PDSCH may be interpreted as being replaced with the PUSCH, and the UL subband may be interpreted as being replaced with the DL subband. In addition, the DCI format transmitted by the base station to the UE may be interpreted as being replaced with the UCI format transmitted by the UE to the base station.

[Method 1-1] Assuming that a first DMRS of PDSCH is received in a symbol immediately following a UL subband (Assuming that a first DMRS of PUSCH is transmitted in a symbol immediately following an DL subband)

In Method 1-1 of the disclosure, a UE may receive PDSCH assuming that the first DMRS of PDSCH is transmitted in a symbol immediately following a UL subband.

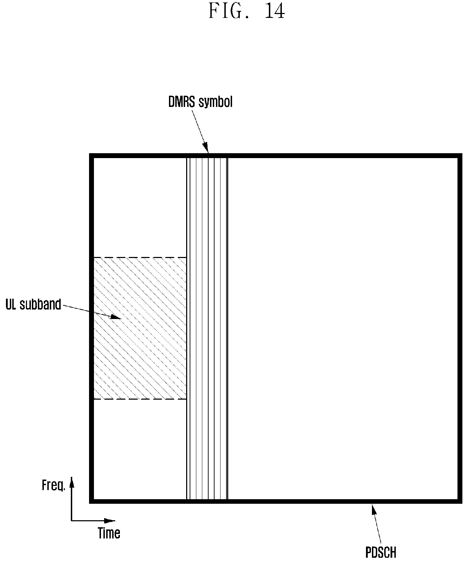

FIG. 14 is a diagram illustrating a method for receiving a first demodulation reference signal (DMRS) of a physical downlink shared channel (PDSCH) in a symbol immediately following a UL subband according to an embodiment of the disclosure.

The UE may identify RBs and symbols for which a PDSCH is scheduled from the received DCI format. In addition, the UE may identify symbols and RBs for which a UL subband is configured from a higher layer signal. The UE may determine a nominal DMRS symbol among the RBs and symbols for which the PDSCH is scheduled. In addition, the UE may identify whether at least one of the RBs of the nominal DMRS symbol overlaps with the symbols and RBs configured in the UL subband.

If there is no overlap, the UE may assume that the DMRS may be received in the nominal DMRS symbol.

If there is overlap, the UE may assume that the DMRS may be received in the symbol immediately following the symbol for which the UL subband is configured. That is, the actual DMRS symbol is the symbol immediately after the symbol in which the UL subband is configured. For reference, the actual DMRS symbol must be located within the symbol in which the PDSCH is scheduled.

According to Method 1-1, the UE may receive the first DMRS in the earliest possible symbol, enabling fast channel estimation and PDSCH decoding. In addition, PDSCH buffering before channel estimation can be minimized.

[Method 1-2] Assuming that a first DMRS of a PDSCH is received after K symbols after a UL subband (Assuming that a first DMRS of a PUSCH is transmitted after K symbols after an DL subband)

In Method 1-2 of the disclosure, a UE may receive a PDSCH assuming that a first DMRS of a PDSCH is transmitted after K symbols after a UL subband.

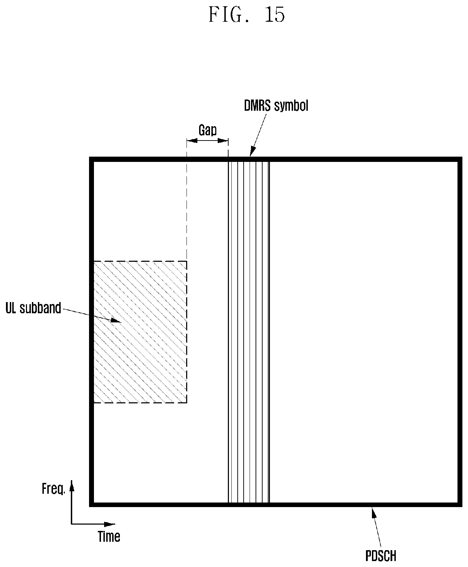

FIG. 15 is a diagram illustrating a method for receiving a first demodulation reference signal (DMRS) of a physical downlink shared channel (PDSCH) in a region after K symbols after a UL subband according to an embodiment of the disclosure.

The UE may identify RBs and symbols for which a PDSCH is scheduled from the received DCI format. In addition, the UE may identify symbols and RBs for which a UL subband is configured from a higher layer signal. The UE may determine a nominal DMRS symbol among the RBs and symbols for which the PDSCH is scheduled. In addition, the UE may identify whether at least one of the RBs of the nominal DMRS symbol overlaps with the symbols and RBs configured in the UL subband.

In case that there is no overlap, the UE may assume that the DMRS may be received in the nominal DMRS symbol.

If there is overlap, the UE may assume that the DMRS may be received in the symbol following K symbols from the symbol for which the UL subband is configured. That is, the actual DMRS symbol is the symbol following K symbols from the symbol in which the UL subband is configured. Here, the actual DMRS symbol may be located within the symbol in which the PDSCH is scheduled. The K symbol may be referred to as a term having the same or similar meaning as time resource, gap, gap resource, offset, etc.

As shown below, the K symbol needs to be introduced in Method 1-2. The UE may receive DMRS in the symbol immediately after the UL subband. This is because DL transmission is possible in RBs where PDSCH is scheduled after the UL subband.

Meanwhile, the symbol immediately after the UL subband may cause performance degradation due to cross link interference from an adjacent UE. For example, in case that an adjacent UE transmits a signal in UL through the UL subband, a UE receiving a PDSCH in DL may be interfered with the UL signal of the adjacent UE. In this case, the transmission time of a UL UE (or a UE transmitting a UL signal) and the reception time of an DL UE (or a UE receiving an DL signal) may not match. For example, if the transmission time of the UL UE is later than the reception time of the DL UE, the DL UE may receive the signal of the UL UE as interference in the symbol immediately after the UL subband. Therefore, in case that the DMRS is received in the symbol immediately following the UL subband, that is, the DMRS is received in the symbol following the K symbol, the DMRS reception quality may be improved.

The UE may determine the K symbol through at least one of the following.

- The K symbol may be fixed to a specific value. The value may be '1' or '2'. This value may be determined to a different value depending on a subcarrier spacing. For example, if the subcarrier spacing is low (e.g., 15k, 30k, 60k), the value may be fixed to '1', and if the subcarrier spacing is high (e.g., 120k), the value may be fixed to '2'. This value may be determined differently depending on a frequency range. For example, the value may be fixed to '1' in FR1, and '2' in FR2.
- The K symbol may be configured by the base station. That is, the base station may configure a K value required for the UE. The K value may be configured by the base station as cell-common (all UEs in the cell may assume the same value) or UE-specific (a specific value may be configured for a specific UE).
- The K symbol may be inferred from the timing advanced (TA) value of the UE. The UE may assume a larger K value as the TA value increases. For example, when a time according to the TA value is $T_{TA}$, the K value may be assumed based on the value obtained by dividing $T_{TA}$ by an OFDM symbol length ($T_{OFDM\,symbol}$). That is, it may be determined as $K = ceil(T_{TA}/T_{OFDM\,symbol})$. Here, ceil (x) may represent the smallest integer among the numbers greater than or equal to x.
- The K symbol may be inferred from a Tx-to-Rx switching value or a Rx-to-Tx switching value. The UE may assume a larger K value as the switching value increases. For example, when a time according to the switching value is $T_{switch}$, the K value may be assumed based on the value obtained by dividing $T_{switch}$ by the OFDM symbol length ($T_{OFDM\,symbol}$). That is, K may be determined as $K=ceil(T_{switch}/T_{OFDM\,symbol})$. Here, ceil(x) may represent the smallest integer among numbers greater than or equal to x.

Embodiment 2. A method for determining an RB that is incapable of PDSCH reception in case that a PDSCH scheduling region overlaps with a UL subband (or a method for determining an RB that is incapable of PUSCH transmission in case that a PUSCH scheduling region overlaps with a DL subband)

Embodiment 2 of the disclosure relates to a method for identifying RBs that cannot be used for PDSCH reception in case that a PDSCH scheduling region overlaps with a UL subband. RBs of a symbol to which a UL subband is assigned cannot be used for PDSCH reception. In Embodiment 2, resources that cannot be used for PDSCH reception can be determined from resources other than RBs of a symbol to which a UL subband is assigned. The UE may not use adjacent RBs of the UL subband for PDSCH reception. In particular, the adjacent RBs can be obtained as follows.

[Method 2-1] A method that assumes that some RBs of symbols after a UL subband may not be used for PDSCH reception (or a method that assumes that some RBs of symbols after a DL subband may not be used for PDSCH reception)

Method 2-1 may assume that some RBs of symbols after a UL subband may not be used for PDSCH reception. Here, some RBs may be RBs included in a frequency band where the UL subband is configured. Further, the number of symbols after the UL subband may be K symbols. Here, a K value may be determined according to Method 1-2 above.

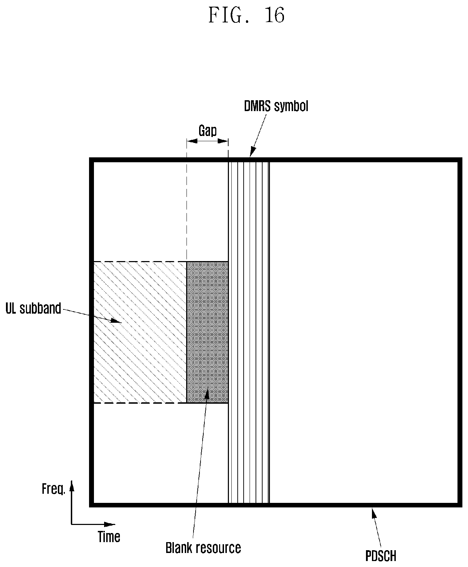

FIG. 16 is a diagram illustrating a method for determining that physical downlink shared channel (PDSCH) reception is impossible in some resource blocks (RB) of a symbol after a UL subband according to an embodiment of the disclosure.

The UE may identify RBs and symbols for which a PDSCH is scheduled from a received DCI format. In addition, the UE may identify symbols and RBs for which a UL subband is configured from a higher layer signal. The UE may determine a nominal DMRS symbol among the RBs and symbols for which the PDSCH is scheduled. In addition, the UE may identify whether at least one of the RBs of the nominal DMRS symbol overlaps with the symbols and RBs configured in the UL subband.

The UE may assume that PDSCH reception is impossible in some RBs (or RBs included in the frequency band for which the UL subband is configured) in a K symbol after the UL subband. The K symbol may not include a DMRS symbol. Here, the K symbol may be referred to as a term having the same or similar meaning as time resource, gap, gap resource, offset, etc. The UE may receive data mapped to RBs used for PDSCH reception. Here, the data may be coded with low density polar code (LDPC) and may be rate-matched to the RBs used for PDSCH reception.

With reference to FIG. 16, in Method 2-1, a 'blank resource' may refer to some RBs (or RBs included in a frequency band where the UL subband is configured) in the K symbol after the UL subband. Meanwhile, the disclosure is not limited thereto, and the blank resource may be referred to by a term having the same or similar meaning as this.

In Method 2-1, a reason that the PDSCH is not received in the 'blank resource' after the UL subband is because some RBs may be affected by interference from adjacent UEs. This is because some RBs of K symbols after the UL subband (or RBs included in the frequency band where the UL subband is configured) may be used to receive interference signals due to signals from other UEs for UL transmission. This is because a symbol boundary between the transmission time of the UE for UL transmission and the reception UE receiving the PDSCH do not match. This is because the transmission time of the UE for UL transmission may be later than the reception time of the reception UE receiving the PDSCH. Therefore, the UEs affected by interference may exclude some RBs from the PDSCH reception, and the UEs not affected by interference may use some RBs for the PDSCH reception.

[Method 2-2] A method that assumes that all RBs of symbols after a UL subband may not be used for PDSCH reception (or a method that assumes that all RBs of symbols after a DL subband may not be used for PUSCH transmission)

Method 2-2 may assume that all RBs of symbols after a UL subband may not be used for PDSCH reception. Here, some RBs may be RBs included in a frequency band where the UL subband is configured. Further, the number of symbols after the UL subband may be K symbols. Here, a K value may be determined according to Method 1-2 above.

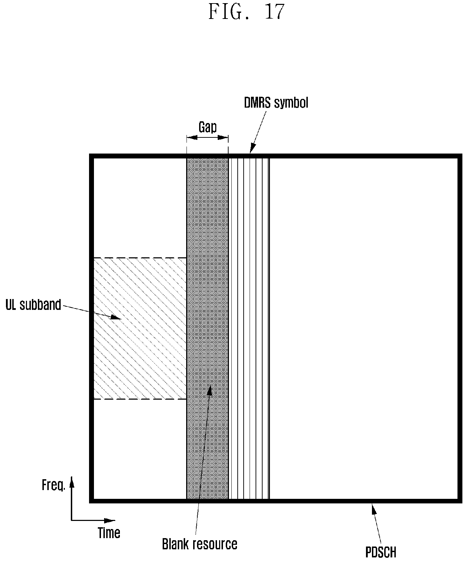

FIG. 17 is a diagram illustrating a method for determining that physical downlink shared channel (PDSCH) reception is impossible in all resource blocks (RB) of a symbol after a UL subband according to an embodiment of the disclosure.

The UE may identify RBs and symbols for which a PDSCH is scheduled from a received DCI format. In addition, the UE may identify symbols and RBs for which a UL subband is configured from a higher layer signal. The UE may determine a nominal DMRS symbol among the RBs and symbols for which the PDSCH is scheduled. In addition, the UE may identify whether at least one of the RBs of the nominal DMRS symbol overlaps with the symbols and RBs configured in the UL subband.

The UE may assume that PDSCH reception is impossible in all RBs in a K symbol after the UL subband. The K symbol may not include a DMRS symbol. Here, the K symbol may be referred to as a term having the same or similar meaning as time resource, gap, gap resource, offset, etc. The UE may receive data mapped to RBs used for PDSCH reception. Here, the data may be coded with low density polar code (LDPC) and may be rate-matched to the RBs used for PDSCH reception.

With reference to FIG. 17, in Method 2-2, a 'blank resource' may refer to all RBs after the K symbol after the UL subband. Meanwhile, the disclosure is not limited thereto, and the blank resource may be referred to by a term having the same or similar meaning as this.

In Method 2-2, a reason that the PDSCH is not received in the 'blank resource' is because the base station cannot transmit the PDSCH in the symbol. The base station must perform UL reception and DL transmission simultaneously in the symbol where the UL subband is configured, and can only perform DL transmission in the symbol where the UL subband is not configured. Depending on the base station implementation, some antenna elements of the base station may be used for UL reception in the symbol where the UL subband is configured, and converted for DL transmission in the symbol where the UL subband is not configured. Further, during the conversion period, the base station cannot transmit a DL signal. In case that the symbols corresponding to the transmission period is K symbols, the base station cannot transmit PDSCH in all RBs of the K symbols. Therefore, the UE may not be able to use all RBs of the K symbols for PDSCH reception.

Meanwhile, this may be determined according to the implementation of the base station. Therefore, the UE may be configured or indicated by the base station whether the blank resource is available or unavailable for PDSCH.

[Method 2-3] A method that assumes that some RBs of symbols before a UL subband may not be used for PDSCH reception (or a method that assumes that some RBs of symbols before a DL subband may not be used for PDSCH reception)

Similar to Method 2-1, Method 2-3 may assume that some RBs of symbols before a UL subband may not be used for PDSCH reception. Here, some RBs may be RBs included in a frequency band where the UL subband is configured. Further, the number of symbols before the UL subband may be K symbols. Here, a K value may be determined according to Method 1-2 above.

The UE may identify RBs and symbols for which a PDSCH is scheduled from a received DCI format. In addition, the UE may identify symbols and RBs for which a UL subband is configured from a higher layer signal. The UE may determine a nominal DMRS symbol among the RBs and symbols for which the PDSCH is scheduled. In addition, the UE may identify whether at least one of the RBs of the nominal DMRS symbol overlaps with the symbols and RBs configured in the UL subband.

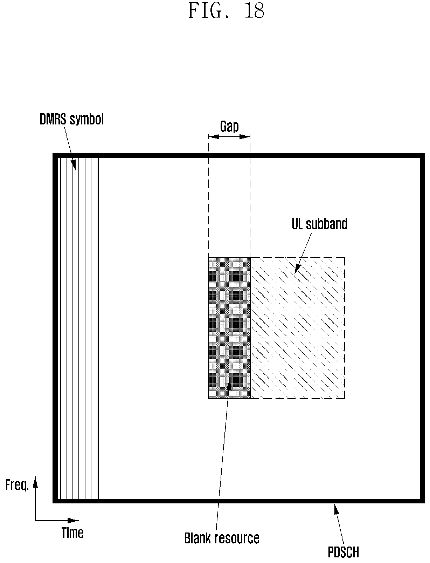

FIG. 18 is a diagram illustrating a method for determining that physical downlink shared channel (PDSCH) reception is impossible in some resource blocks (RB) of a symbol before a UL subband according to an embodiment of the disclosure.

With reference to FIG. 18, the UE may assume that PDSCH reception is impossible in some RBs (or RBs included in the frequency band for which the UL subband is configured) in the K symbol before the UL subband (or symbols corresponding to gaps in FIG. 18). For reference, the K symbol may not include a DMRS symbol. Here, the K symbol may be referred to as a term having the same or similar meaning as time resource, gap, gap resource, offset, etc. The UE may receive data mapped to RBs used for PDSCH reception. Here, the data may be coded with low density polar code (LDPC) and may be rate-matched to the RBs used for PDSCH reception.

In Method 2-3, a 'blank resource' may refer to some RBs (or RBs included in a frequency band where the UL subband is configured) in the K symbol before the UL subband. Meanwhile, the disclosure is not limited thereto, and the blank resource may be referred to by a term having the same or similar meaning as this.

Similar to Method 2-1, the reason that the PDSCH is not received the 'blank resource' before the UL subband in Method 2-3 is because some RBs may be affected by interference from adjacent UEs. This is because some RBs of the K symbols before the UL subband (or RBs included in a frequency band where a UL subband is configured) may receive interference signals due to signals from other UEs performing UL transmission. This is because a symbol boundary between the transmission time of the UE for UL transmission and the reception UE receiving the PDSCH do not match. More specifically, this is because the transmission time of the transmission UE for UL may be earlier than the reception time of the reception UE receiving the PDSCH due to timing advance (TA), etc. Therefore, the UE affected by interference may exclude some RBs from the PDSCH reception, and the UE not affected by interference may use some RBs for the PDSCH reception.

[Method 2-4] A method that assumes that all RBs of symbols before a UL subband may not be used for PDSCH reception (or a method that assumes that all RBs of symbols before a DL subband may not be used for PDSCH reception)

Similar to Method 2-2, Method 2-4 may assume that all RBs of symbols before a UL subband may not be used for PDSCH reception. Here, some RBs may be RBs included in a frequency band where the UL subband is configured. Further, the number of symbols before the UL subband may be K symbols. Here, a K value may be determined according to Method 1-2 above.

The UE may identify RBs and symbols for which a PDSCH is scheduled from a received DCI format. In addition, the UE may identify symbols and RBs for which a UL subband is configured from a higher layer signal. The UE may determine a nominal DMRS symbol among the RBs and symbols for which the PDSCH is scheduled. In addition, the UE may identify whether at least one of the RBs of the nominal DMRS symbol overlaps with the symbols and RBs configured in the UL subband.

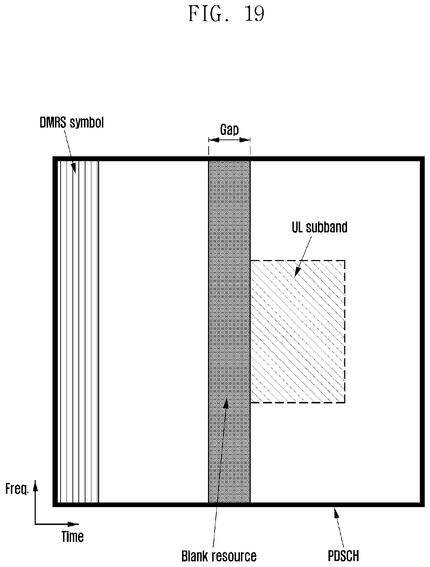

FIG. 19 is a diagram illustrating a method for assuming that PDSCH reception is impossible in all resource blocks (RB) of a symbol before a UL subband according to an embodiment of the disclosure.

With reference to FIG. 19, the UE may assume that PDSCH reception is impossible in all RBs in the K symbol before the UL subband (or symbols corresponding to gaps in FIG. 19). The K symbols may not include DMRS symbols. Here, the K symbol may be referred to as a term having the same or similar meaning as time resource, gap, gap resource, offset, etc. The UE may receive data mapped to RBs used for PDSCH reception. Here, the data may be coded with low density polar code (LDPC) and may be rate-matched to the RBs used for PDSCH reception.

In Method 2-4, a 'blank resource' may refer to all RBs in the K symbol before the UL subband. Meanwhile, the disclosure is not limited thereto, and the blank resource may be referred to by a term having the same or similar meaning as this.

In Method 2-4, the reason that the PDSCH is not received in the 'blank resource' is because the base station cannot transmit the PDSCH in the symbol. More specifically, the base station must perform UL reception and DL transmission simultaneously in the symbol where the UL subband is configured, and may only perform DL transmission in the symbol where the UL subband is not configured. Depending on the base station implementation, some antenna elements of the base station may be used for UL reception in the symbol where the UL subband is configured, and may be converted for DL transmission in the symbol where the UL subband is not configured. During the conversion period, the base station cannot transmit a DL signal. Conversely, some antenna elements of the base station may be used for DL transmission in the symbol where the UL subband is not configured, and may be converted for UL reception in the symbol where the UL subband is configured. The base station cannot transmit a DL signal during the conversion period. The symbols corresponding to the transmission period may be K symbols, and the base station cannot transmit PDSCH in all RBs of the K symbols. Therefore, the UE may assume that all RBs of the K symbols cannot be used for PDSCH reception.

Meanwhile, this may be determined according to the implementation of the base station. Therefore, the UE may be configured or indicated by the base station whether the blank resource is able to be used for PDSCH or not.

[Method 2-5] A method for configuring or indicating whether to use a blank resource of PDSCH (or a method for configuring or indicating whether to use a blank resource of PUSCH)

The base station may configure whether to use or exclude a 'blank resource' for PDSCH reception using a higher layer signal. For example, in case that the base station configures the 'blank resource' not to be used for PDSCH reception, the UE may identify the blank resource according to Method 2-2 and assume that it is excluded from PDSCH reception. In case that the 'blank resource' is configured to be available for PDSCH reception, the UE may not apply Method 2-2.

Alternatively, the base station may configure to the UE whether to use the 'blank resource' for PDSCH reception or exclude it through the DCI format that schedules the PDSCH. The DCI format may include 1 bit for determining whether to use the 'blank resource' for PDSCH reception or exclude it. Alternatively, whether to use the 'blank resource' for PDSCH reception or exclude it may be indicated in the rate-matching indicator field of the DCI format. Here, the rate-matching indicator may be configured to 1 bit or 2 bits, and in this case, a corresponding rate-matching resource (or a resource to be excluded from PDSCH reception) may be configured for each bit. The base station may include the 'blank resource' in the rate-matching resource corresponding to one bit in the rate-matching indicator. Therefore, the UE may identify whether to use the 'blank resource' for PDSCH reception or exclude it through the DCI format that schedules the PDSCH.

Embodiment 3. A method in which a PDSCH is divided into two segments based on UL subband configuration and a first DMRS reception of each segment is assumed (or a method in which a PUSCH is divided into two segments based on a DL subband configuration and a first DMRS transmission of each segment is assumed)

A base station must perform UL reception and DL transmission simultaneously in a symbol in which a UL subband is configured, and may only perform DL transmission in a symbol in which the UL subband is not configured. Depending on the base station implementation, some antenna elements of the base station may be used for UL reception in a SBFD symbol (or a symbol in which the UL subband is configured) and converted for DL transmission in a non-SBFD symbol (or a symbol in which the UL subband is not configured). Therefore, the base station may transmit the SBFD symbol and non-SBFD symbol through different antenna elements.

Meanwhile, the UE may not be able to assume phase continuity and power constant for the signal received in the SBFD symbol and the signal received in the non-SBFD symbol. In this case, a DMRS for decoding the signal received in the SBFD symbol needs to be received in the SBFD symbol, and a DMRS for decoding the signal received in the non-SBFD symbol needs to be received in the non-SBFD symbol.

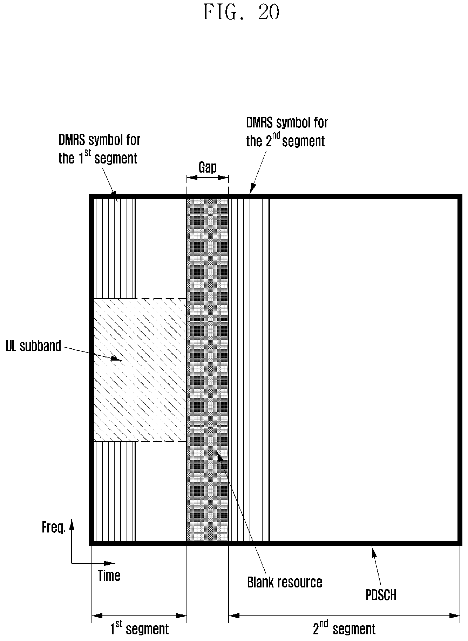

FIG. 20 is a diagram illustrating a method for dividing a physical downlink shared channel (PDSCH) into two segments based on UL subband configuration, and assuming reception of a first demodulation reference signal (DMRS) in each segment, according to an embodiment of the disclosure.

With reference to FIG. 20, PDSCH symbols overlapping with SBFD symbols may be referred to as a first segment, PDSCH overlapping with non-SBFD symbols may be referred to as a second segment, and a UE may assume that a separate first DMRS is received in each segment. That is, the UE may receive the first DMRS by assuming that the first DMRS of the first segment is received in the first symbol of the first segment. Thereafter, the UE may decode data received in the first segment by using a channel estimated through the first DMRS. In addition, the UE may receive the first DMRS by assuming that the first DMRS of the second segment is received in the first symbol of the second segment. Thereafter, the UE may decode data received in the second segment using the channel estimated through the first DMRS. Here, the UE may assume that the channel estimated in the first segment may not be used for decoding in the second segment. For reference, some symbols in the segment may be excluded. Here, some symbols may be K symbols immediately after the UL subband. Alternatively, some symbols may be K symbols immediately before the UL subband.

Each segment may be configured with consecutive symbols. Therefore, although described as two segments in the previous description, it may be divided into two or more segments. For example, if a PDSCH is indicated to be received in symbol 0 to symbol 13 of a slot and the SBFD symbol is symbol 4 to 5, the UE may determine symbol 0 to 3 as the first segment, symbol 4 to 5 as the second segment, and symbol 6 to 13 as the third segment.

The UE may receive data in the remaining symbols except for the symbol in which the first DMRS is received for each segment. Here, the assumption for receiving data may follow one of the following methods or a combination of these methods.

[Method 3-1] A method that assumes that one TB is received by rate-matching according to the number of resource elements (REs) of each segment according to each RV value (e.g., a repetition method)

In Method 3-1, the UE may receive one transport block (TB) repeatedly in each segment. Here, a TB transmitted in each segment may be mapped with coded bits determined according to the same RV value or different RV values. For example, if the RV value is 0, the TB may be mapped to the same coded bit and transmitted in each segment.

In Method 3-1, the RV value may be indicated in the DCI format. In case that one RV value is indicated in the DCI format, the UE may apply the one RV value to all segments equally. In case that an RV sequence is indicated in the DCI format, the first RV value of the RV sequence may be applied to the first segment, and the second RV value may be applied to the second segment.

[Method 3-2] A method that assumes that one TB is received by rate-matching according to the number of REs of a first and second segments according to a first RV value (e.g., like a TBoMS method)

According to Method 3-2, one TB may be mapped to REs of each segment and transmitted. The UE may be indicated with one RV value from the DCI format. The UE may determine the coded bits and the location of the RE to be transmitted based on the RV value and the number of REs included in the segments. The UE may receive the coded bits at the location of the determined RE. According to this, even if they are different segments, coded bits may be mapped to REs consecutively.

[Method 3-3] A method that assumes that a first TB is received by rate-matching the number of REs in a first segment according to a first RV value and a second TB is received by rate-matching the number of REs in a second segment according to a second RV value (e.g., like a multi-PDSCH/PUSCH scheduling method)

According to Method 3-3, different TBs may be transmitted in each segment. For example, the base station may generate two TBs (here, the two TBs may include different data) and map them to each of the two segments and transmit the same. The UE may receive the first TB by assuming the first RV value in the first segment and receive the second TB by assuming the second RV value in the second segment.

Embodiment 4. A method for determining a location of a first DMRS in case that a PDSCH scheduling region overlaps with a UL subband in a time domain (or a method for determining a location of a first DMRS in case that a PUSCH scheduling region overlaps with an DL subband in a time domain,)

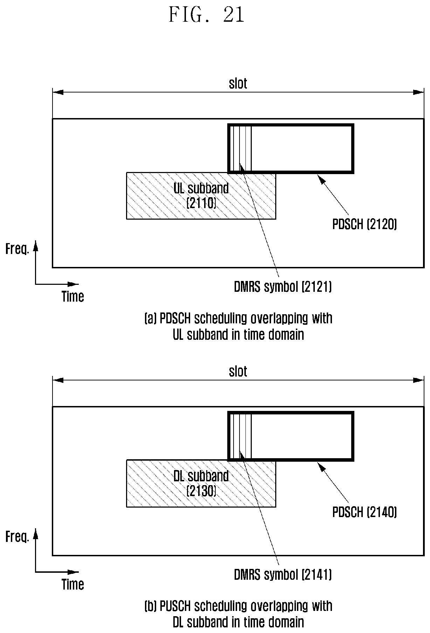

FIG. 21 is a diagram illustrating a method for receiving a first demodulation reference signal (DMRS) in case that a PDSCH scheduling region overlaps with a UL subband in a time domain according to an embodiment of the disclosure. With reference to FIG. 21(A), Embodiment 4 is a method for determining a location of a first DMRS 2121 in case that a PDSCH scheduling region 2120 overlaps with a UL subband in a time domain. The above-described Embodiments 1, 2, and 3 may be applied to both a case where the PDSCH scheduling region overlaps with a UL subband in a time-frequency domain and a case where the PDSCH scheduling region overlaps with a UL subband only in a time domain. Meanwhile, Embodiment 4 assumes that the PDSCH scheduling region overlaps with the UL subband in the time domain but does not overlap in the frequency domain. In this case, since the PDSCH scheduled by the UE does not overlap with the UL subband in the time-frequency domain, the first DMRS may be transmitted in the nominal first DMRS symbol. However, in case that the first DMRS is transmitted in the nominal first DMRS symbol, the channel estimation performance using the first DMRS may deteriorate. This is because interference occurs due to UL transmission of an adjacent UE in the UL subband. Therefore, the location of the first DMRS may be moved as in Embodiment 1 above. However, in case that there is sufficient frequency separation between the UL subband and the scheduled PDSCH, the influence of the interference may be limited. Therefore, the method for determining the location of the first DMRS in Embodiment 1 may be selectively applied according to UL subband configuration and PDSCH frequency domain indication.

Meanwhile, methods in the following embodiment may also be applied to a PUSCH 2140. With reference to FIG. 21(B), Embodiment 4 is a method for determining the location of the first DMRS 2141 in case that the PUSCH scheduling region 2140 overlaps with the DL subband 2130 in the time domain.

Hereinafter, embodiments are primarily described with respect to PDSCH, but they may be equally or similarly applied to PUSCH. If the following embodiments are applied to PUSCH, PDSCH may be replaced with PUSCH and a UL subband may be interpreted as being replaced with an DL subband.

[Method 4-1] A method for selectively determining a location of a first DMRS according to a frequency difference between a UL subband and a PDSCH scheduling region

Method 4-1 is a method for modifying a location of a first DMRS according to the previously described Embodiment 1 in case that a frequency spacing between a UL subband and a PDSCH frequency region is smaller than a predetermined spacing according to UL subband configuration and PDSCH frequency region configuration. If the frequency spacing between them is larger than a predetermined spacing, the UE may receive the first DMRS at the location of the nominal first DMRS.

Here, the frequency spacing may be the smallest value among differences between the indices of RBs where the PDSCH is scheduled and the indices of RBs where the UL subband is configured. For example, in case that the indices of RBs for which PDSCH is scheduled are RB_PDSCH(0), ..., RB_PDSCH(N_RB-1), and the indices of RBs for which UL subband is configured are RB_ULsubband(0), ..., RB_ULsubband (N_ULsubband -1), N_RB may be the number of RBs for which PDSCH is scheduled, and N_ULsubband may be the number of RBs included in the UL subband. In this case, the frequency spacing may be determined as the smallest value among |RB_PDSCH(i) - RB_ULsubband(j)| for all i=0,1, ..., N_RB-1, j=0,1, ..., N_ULsubband-1.

The determined spacing here may be a value that the base station may configure for the UE. The above-mentioned determined spacing may be configured in units of RBs.

[Method 4-2] A method for boosting power of DMRS

Method 4-2 is a method for increasing a power of a first DMRS instead of changing the location of the first DMRS. In general, the UE may assume the same power in the symbol where the PDSCH is received. Here, the first DMRS may not include all REs depending on the DMRS configuration. In this case, the power of some REs where the DMRS is transmitted may be increased. However, the power of the symbol where the PDSCH is received may be maintained the same.

That is, the power of some REs in the frequency domain is increased, but the power of one symbol may be maintained the same. For example, if the first DMRS is transmitted in even REs and odd REs are left empty, energy per RE (EPRE) of even REs may be increased by 3 dB in all REs.

In the disclosure, Method 4-2 proposes increasing the power of the symbol of the first DMRS. That is, the symbol where the first DMRS is transmitted may be received with higher power compared to those of other symbols. Let the ratio of the power of the symbol in which the first DMRS is transmitted and the power of other symbols be X (dB). Here, if X = 0, the power of the symbol in which the first DMRS is transmitted and the power of other symbols may be the same.

The base station may configure the X value to the UE. For example, the base station may indicate the X value in the DCI format that schedules the PDSCH. Here, the X value may indicate one of the values of 0 and non-0. For example, the X value may be indicated as 0 or 3 through the DCI format.

Alternatively, the UE may determine whether to assume DMRS power boosting based on the frequency spacing between the UL subband and the scheduled PDSCH. That is, if the frequency spacing of the scheduled PDSCH is greater than the determined value, the power of the symbol in which the first DMRS is transmitted may be greater than the power of other symbols, depending on the X value. Here, the frequency spacing and determined value may be determined as described in Method 4-1.

The UE may estimate the channel information value of the symbol other than the symbol in which the first DMRS is transmitted based on the above X value and decode the PDSCH.

In Method 4-2, power boosting of the first DMRS symbol has been described. In the case of PUSCH, not only the first DMRS but also the power of the entire PUSCH may be boosted. This may be applied at least in the following cases.

In case that the scheduled PUSCH overlaps with a SBFD symbol (a symbol in which a UL subband/DL subband is configured), the UE may transmit the PUSCH by increasing the power of the PUSCH. Here, not only the DMRS symbol of the PUSCH but also all symbols to which the PUSCH is allocated (e.g., a case where all RBs included in the symbol are included) may be transmitted by increasing the power. For example, the UE may increase the power by the following method.

- The UE may increase the power of the PUSCH by a set value X. Here, X is the same as the value described above. The base station may indicate the X value in the DCI format that schedules the PDSCH. Here, the X value may indicate one of the values of 0 and non-0. For example, through the DCI format, the X value may be indicated as one of 0 and 3.
- The UE may be configured with different power control values ($\alpha_{b,f,c}(j)$ or $P_{O\_PUSCH,b,f,c}(j)$ ) for the following power control formula. Further, the PUSCH transmission power may be determined by applying the different power control values. For reference, the definition of the formula and the description of the parameters may be referred to the 3GPP standard document TS38.213.

$$P_{\text{PUSCH},b,f,c}(i,j,q_d,l)$$

$$= \min \left\{ \begin{array}{c} P_{\text{CMAX},f,c}(i) \\ P_{\text{O\_PUSCH},b,f,c}(j) + 10 \log_{10}\left(2^\mu \cdot M_{\text{RB},b,f,c}^{\text{PUSCH}}(i)\right) + \alpha_{b,f,c}(j) \cdot PL_{b,f,c}(q_d) + \Delta_{\text{TF},b,f,c}(i) + f_{b,f,c}(i,l) \end{array} \right\}$$

The base station may indicate whether to use the power control value ($\alpha_{b,f,c}(j)$ or $P_{\text{O\_PUSCH},b,f,c}(j)$) in the DCI format that schedules the PDSCH.

In this way, increasing the transmission power of the PUSCH may be selectively applied according to the frequency spacing between the RBs in which the PUSCH is scheduled and the DL subband. That is, if the frequency spacing is large, the PUSCH is not transmitted with increased power, and if the frequency spacing is small, the PUSCH may be transmitted with increased power.

Embodiment 5. A method for receiving PDSCH in each slot based on the configuration of a UL subband and a first DMRS symbol (or a method for transmitting PUSCH in each slot based on the configuration of a DL subband and a first DMRS symbol)

In the above Embodiments 1, 2, and 3, in case that the UE fails to receive the first DMRS of the scheduled PDSCH in the nominal first DMRS symbol, the first DMRS is received by moving to another symbol (e.g., the actual first DMRS symbol) and the PDSCH is decoded. That is, the location of the first DMRS received by the UE may vary depending on the UL subband.

Meanwhile, the UE may not receive the PDSCH without moving the location of the first DMRS. This may be determined for each PDSCH repetition repeated in each slot in PDSCH repetition reception. In the case of SPS PDSCH reception, it may be determined for each SPS PDSCH.

[Method 5-1] In case that a first DMRS symbol of a PDSCH overlaps with a UL subband in one slot, PDSCH reception in the slot is dropped (in case of Type-A PUSCH repetition, in case that a first DMRS symbol of a PUSCH overlaps with an DL subband in one slot, PUSCH transmission in the slot is dropped)

The UE may be configured to receive PDSCH repetition reception from the base station. For example, the base station may be configured to receive the PDSCH repeatedly in $N_{\text{rep}}$ slots. Here, $N_{\text{rep}}$ may have an integer value greater than 1, such as 2 or 4. If the UE is scheduled for the PDSCH, the UE may receive the PDSCH repeatedly in the $N_{\text{rep}}$ slot. Here, $N_{\text{rep}}$ slots may be consecutive $N_{\text{rep}}$ slots from the slots in which the PDSCH is scheduled. The symbols and RBs received in each slot may all have the same value.

The UE may identify whether the first DMRS symbol overlaps with the UL subband for each PDSCH repetition of each slot. In case that the first DMRS symbol overlaps with the UL subband, the UE may not receive the PDSCH repetition. Here, not receiving may include not receiving the first DMRS of the PDSCH repetition. In case that the first DMRS symbol does not overlap with the UL subband, the UE may repeatedly receive the PDSCH. Here, repeatedly receiving may include receiving the first DMRS of the PDSCH repetition at the location of the nominal first DMRS symbol.

The UE may be indicated to activate a semi-persistent scheduling (SPS) PDSCH from the base station. When the UE is indicated to activate the SPS PDSCH, the UE may receive the SPS PDSCH in the slot determined according to the configured periodicity. Each SPS PDSCH may be assigned with a unique hybrid automatic repeat request (HARQ) process ID. Further, the symbols and RBs of the SPS PDSCHs received in each slot may be the same.

The UE may identify whether the first DMRS symbol of each SPS PDSCH of each slot overlaps with the UL subband. In case that the first DMRS symbol overlaps with the UL subband, the UE may not receive the SPS PDSCH. Here, not receiving may include not receiving the first DMRS of the SPS PDSCH. If the first DMRS symbol does not overlap with the UL subband, the UE may receive the SPS PDSCH. Here, receiving may include receiving the first DMRS of the SPS PDSCH at the location of the nominal first DMRS symbol.

[Method 5-2] In case of Type-B PUSCH repetition, in case that a first DMRS symbol of nominal PUSCH repetition overlaps with a DL subband, a method for considering the symbol in which the DL subband is configured as an invalid symbol

Type-B PUSCH repetition may be configured to a UE. In case that Type-B PUSCH repetition is configured, the operation of the UE may be as follows.

The UE may receive a DCI format that schedules a PUSCH. The nominal repetition for which the PUSCH is scheduled may be identified from the TDRA field of the DCI format. Further, the number of repetitions of the nominal repetitions (e.g., numberOfRepetitions) may be identified. When n=0,1, ..., numberOfRepetitions-1, a slot where the n-th nominal repetition starts may be $K_s + \left\lfloor \frac{S+n*L}{N_{symb}^{slot}} \right\rfloor$, the starting symbol within the slot may be $mod(S + n * L, N_{symb}^{slot})$. The symbol occupied by the nominal repetition may be L consecutive symbols. Here, the values of S and L may be indicated from the TDRA field of the DCI format.

The UE may divide the nominal repetition into one or more actual repetitions. The method for obtaining one or more actual repetitions is as follows. In case that the nominal repetitions exist across a slot boundary, the nominal repetitions may be divided based on the slot boundary. In other words, one actual repetition may not include symbols of different slots.

In case that the nominal repetitions overlap with an invalid symbol, they may be divided before and after the invalid symbol. In other words, one actual repetition cannot include the preceding and following symbols of the invalid symbol. In other words, the actual repetition may only include consecutive symbols within one slot.

Here, the invalid symbol may include at least one of the following.

- A DL symbol configured through a higher layer signal may be included in an invalid symbol.
- A symbol configured through an SS/PBCH block may be included in an invalid symbol.
- Symbols included in the Type0-PDCCH common search space may be included in an invalid symbol.
- If a specific value (e.g., numberOfInvalidSymbolsForDL-UL-Switching) is configured in a higher layer, symbols corresponding to the specific value after the DL symbol configured through a higher layer signal may be included in an invalid symbol.
- Invalid symbols (e.g., invalidSymbolPattern) may be configured in a higher layer.

In Method 5-2, an invalid symbol may be additionally defined based on the UL subband configuration. The invalid symbol that may be newly defined may include at least one of the following:

- Condition 1) In case that a nominal first DMRS symbol (a first symbol) of nominal repetition overlaps with a DL subband, the consecutive SBFD symbols from the symbol may be included in an invalid symbol.
- Condition 2) K symbols after a SBFD symbol may be included in an invalid symbol.
- Condition 3) K symbols before a SBFD symbol may be included in an invalid symbol.
- Condition 4) If all the PUSCH frequency regions in a SBFD symbol are not included in a SBFD UL subband, the SBFD symbols may be included in an invalid symbol.

For reference, in case that a symbol other than the nominal first DMRS symbol of the nominal repetition (e.g., the first symbol) overlaps with the UL subband, the symbol may not be included in the invalid symbol.

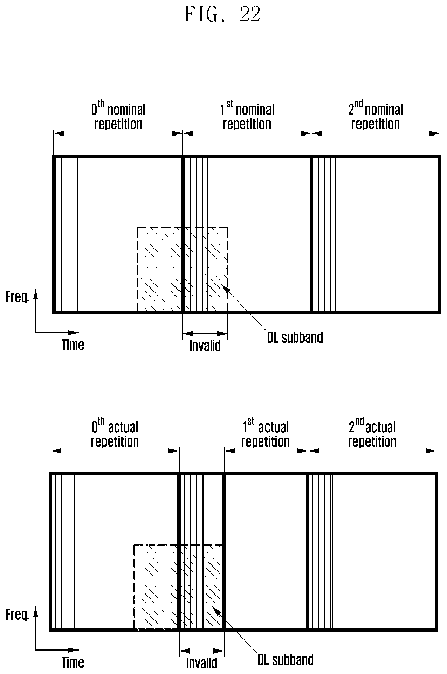

FIG. 22 is a diagram illustrating a method for considering a symbol in which a downlink (DL) subband is configured as an invalid symbol in case of a Type-B physical uplink shared channel (PUSCH) repetition according to an embodiment of the disclosure. For convenience of explanation, only Condition 1 is assumed in FIG. 22. However, the present embodiment is not limited to Condition 1, and other conditions (e.g., Conditions 2, 3, or 4) may be included.

With reference to FIG. 22, a UE may identify three nominal repetitions (0th, 1st, 2nd). The UE may identify the actual repetition based on the nominal repetitions. According to Condition 1, the UE may identify that the first DMRS symbol of the 1st nominal repetition overlaps with the DL subband. Therefore, the symbol and SBFD symbols consecutive from the symbol may be identified as invalid. Accordingly, the 1st actual repetition may be configured with consecutive symbols excluding the invalid symbols.

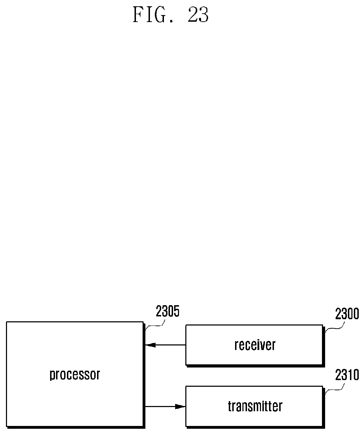

FIG. 23 is a diagram illustrating a structure of a UE in a wireless communication system according to an embodiment of the disclosure.

With reference to FIG. 23, a UE may include a transceiver that is a collective name of a receiver 2300 and a transmitter 2310, a memory (not illustrated) and a processor 2305 (or a controller or processor). According to the above-described communication method of the UE, the transceiver 2300 and 2310, memory, and processor 2305 of the UE may operate. However, the constituent elements of the UE are not limited to the above-descried example. For example, the UE may include fewer or more constituent elements than the above-described constituent elements. In addition, the transceiver, the memory, and the processor may be implemented as a single chip.

The transceiver may transmit or receive a signal with a base station. Here, the signal may include control information and data. To this end, the transceiver may include an RF transmitter that up-converts and amplifies a frequency of a transmitted signal, an RF receiver that low-noise amplifies a received signal and down-converts a frequency, and the like. This is merely an example of the transceiver, and the constituent elements of the transceiver are not limited to an RF transmitter and an RF receiver.

In addition, the transceiver may receive a signal via a wireless channel and may output the same to the processor, and may transmit a signal output from the processor via a wireless channel.

The memory may store a program and data needed when the UE operates. In addition, the memory may store control information or data included in a signal transmitted or received by the UE. The memory may be configured as a storage medium such as a ROM, a RAM, a hard disk, a CD-ROM, a DVD, and the like, or a combination of storage media. In addition, the memory may be in plural.

In addition, the processor may control a series of processes so that the UE operates according to the above-described embodiment of the disclosure. For example, the processor may receive DCIs configured in two types of layers, and may control constituent elements of a UE so as to receive multiple PDSCHs at the same time. The processor may be in plural, and the processor may execute a program stored in the memory so as to control constituent elements of the UE.

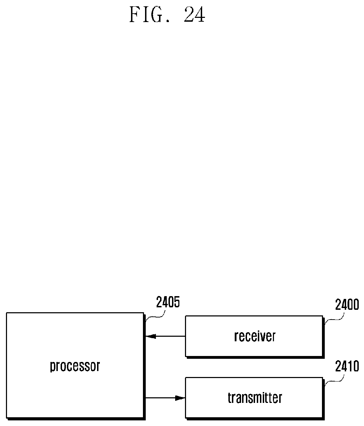

FIG. 24 is a diagram illustrating a structure of a base station in a wireless communication system according to an embodiment of the disclosure.

With reference to FIG. 24, a base station may include a transceiver that is a collective name of a receiver 2400 and a transmitter 2410, a memory (not illustrated), and a processor 2405 (or a controller or processor). According to the above-described communication method of the base station, the transceiver 2400 and 2410, memory, and processor 2405 of the base station may operate. However, the component elements of the base station are not limited to the above-descried example. For example, the base station may include fewer or more constituent elements than the above-described constituent elements. In addition, the transceiver, the memory, and the processor may be implemented as a single chip.

The transceiver may transmit or receive a signal with a UE. Here, the signal may include control information and data. To this end, the transceiver may include an RF transmitter that up-converts and amplifies a frequency of a transmitted signal, and an RF receiver that low-noise amplifies a received signal and down-converts a frequency. However, this is merely one embodiment, and the constituent elements of the transceiver are not limited to the RF transmitter and the RF receiver.

In addition, the transceiver may receive a signal via a wireless channel and may output the same to the processor, and may transmit a signal output from the processor via a wireless channel.

The memory may store a program and data needed when the base station operates. In addition, the memory may store control information or data included in a signal transmitted or received by the base station. The memory may be configured as a storage medium such as a ROM, a RAM, a hard disk, a CD-ROM, a DVD, and the like, or a combination of storage media. In addition, the memory may be in plural.

The processor may control a series of processes such that the base station operates according to the above-described embodiment of the disclosure. For example, the processor may control each constituent element of the base station to form DCIs in two types of layers that include allocation information associated with multiple PDSCHs and to transmit the same. The processor may be in plural, and the processor may execute a program stored in the memory so as to control constituent elements of the base station.

The methods according to the embodiments described in the claims or specification of the disclosure may be implemented in the form of hardware, software, or a combination of hardware and software.

In case that the methods are implemented by software, a computer-readable storage medium for storing one or more programs (software modules) may be provided. The one or more programs stored in the computer-readable storage medium may be configured for execution by one or more processors within an electronic device. The at least one program may include instructions that cause the electronic device to perform the methods according to various embodiments disclosed in the claims or specification of the disclosure.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included therein.

In addition, the programs may be stored in an attachable storage device which may access the electronic device through communication networks such as the Internet, Intranet, local area network (LAN), Wide LAN (WLAN), and storage area network (SAN) or a combination thereof. Such a storage device may access a device performing the embodiments of the disclosure via an external port. In addition, a separate storage device on the communication network may access a device performing the embodiments of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may be also configured in a single element or an element expressed in the singular may be also configured in multiple elements.

Meanwhile, the embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Furthermore, the above respective embodiments may be employed in combination, as necessary. For example, a part of one embodiment of the disclosure may be combined with a part of another embodiment to operate a base station and a UE. As an example, a part of embodiment 1 of the disclosure may be combined with a part of embodiment 2 to operate a base station and a UE. Furthermore, although the above embodiments have been described on the basis of the FDD LTE system, other variant embodiments based on the technical idea of the above-described embodiments may also be implemented in other systems such as TDD LTE system, 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

Furthermore, in the methods of the disclosure, a part or all of the contents of each embodiment may be combined without departing from the essential spirit and scope of the disclosure.

Various embodiments of the disclosure have been described. The above description of the disclosure is for illustrative purposes only, and the embodiments of the disclosure are not limited to the disclosed embodiments. Those skilled in the art will understand that the disclosure can be easily modified into other specific forms without changing the technical idea or essential features of the disclosure. The scope of the disclosure is indicated by the claims described below rather than the detailed description above, and all changes or modifications derived from the meaning and scope of the claims and their equivalent concepts should be interpreted as being included in the scope of the disclosure.

**Claims**

1. A method performed by a terminal in a wireless communication system supporting a subband non-overlapping full duplex (SBFD), the method comprising:

   receiving, from a base station, uplink subband configuration information including time-and-frequency resource information for configuring a part of a resource for downlink reception as a resource for uplink transmission;
   receiving, from the base station, scheduling information to receive data;
   determining, based on the uplink subband configuration information and the scheduling information, resource information to recive a demodulation reference signal (DMRS) for the data; and
   receiving the DMRS from the base station based on the determined resource information.

2. The method of claim 1, wherein the determining the resource information to recive the DMRS for the data further comprises:

   determining whether a first region of a time-and-frequency resource based on the uplink subband configuration information and a second region configured to receive the DMRS overlaps; and
   determining, in case that the first region and the second region overlap, a resource corresponding to a symbol of K symbols after a last symbol for the first region as a resource to receive the DMRS, and
   wherein the K symbols are fixed to a specific value, configured by the base station, determined based on a timing advance between the terminal and the base station, or determined based on transmission/reception switching of the terminal.

3. The method of claim 1, wherein the determining the resource information to receive the DMRS for the data further comprises:

   determining whether a third region of a time-and-frequency resource based on the uplink subband configuration information and a fourth region in which transmission of the data is scheduled according to the scheduling information overlap in a time domain; and
   determining, in case that the third region and the fourth region overlap in the time domain, a resource corresponding to a symbol of K symbols after a last symbol for a region configured to receive the DMRS in the fourth region or the third region, as a resource to receive the DMRS.

4. The method of claim 1, comprising:

   determining a region where reception of the data is impossible in case that a fifth region of a time-and-frequency resource based on the uplink subband configuration information and a sixth region where transmission of the data is scheduled according to the scheduling information overlap; and

receiving the data from the base station based on the determined region where the reception of the data is impossible,

wherein the region where the reception of the data is impossible includes some or all frequency resources after a last symbol of the fifth region, or some or all frequency resources before a first symbol of the fifth region.

5. A method performed by a base station in a wireless communication system supporting a subband non-overlapping full duplex (SBFD), the method comprising:

transmitting, to a terminal, uplink subband configuration information including time-and-frequency resource information for configuring a part of a resource for downlink reception as a resource for uplink transmission;
transmitting, to the terminal, scheduling information for data reception; and
transmitting, to the terminal, a demodulation reference signal (DMRS) for the data, based on the uplink subband configuration information and the scheduling information.

6. The method of claim 5, wherein the transmitting the DMRS for the data further comprises:

transmitting, to the terminal, the DMRS in a resource corresponding to a symbol of K symbols after a last symbol for a first region in case that the first region of a time-and-frequency resource based on the uplink subband configuration information and a second region configured to receive the DMRS overlap, and
wherein the K symbols are fixed to a specific value, configured by the base station, determined based on a timing advance between the terminal and the base station, or determined based on transmission/reception switching of the terminal.

7. The method of claim 5, wherein the transmitting the DMRS for the data further comprises:
transmitting, to the terminal, the DMRS in a resource corresponding to a symbol of K symbols after a last symbol for a region configured to receive the DMRS in the fourth region or a third region in case that the third region of a time-and-frequency resource based on the uplink subband configuration information and a fourth region in which transmission of the data is scheduled according to the scheduling information overlap in a time domain,.

8. The method of claim 5, further comprising:

transmitting, to the terminal, the data based on the region where the reception of the data is impossible in case that a fifth region of a time-and-frequency resource based on the uplink subband configuration information and a sixth region where transmission of the data is scheduled according to the scheduling information overlap,
wherein the region where the reception of the data is impossible includes some or all frequency resources after a last symbol of the fifth region, or some or all resources before a first symbol of the fifth region.

9. A terminal in a wireless communication system supporting a subband non-overlapping full duplex (SBFD), the terminal comprising:

a transceiver configured to transmit or receive a signal; and
a controller,
wherein the controller:

receive, from a base station, uplink subband configuration information including time-and-frequency resource information for configuring a part of a resource for downlink reception as a resource for uplink transmission;
receive, from the base station, scheduling information to receive data;
determine, based on the uplink subband configuration information and the scheduling information, resource information to receive a demodulation reference signal (DMRS) for the data; and
receive the DMRS from the base station based on the determined resource information.

10. The terminal of claim 9, wherein the controller:

determine whether a first region of a time-and-frequency resource based on the uplink subband configuration information and a second region configured to receive the DMRS overlap; and

determine, in case that the first region and the second region overlap, a resource corresponding to a symbol of K symbols after a last symbol for the first region as a resource for receiving the DMRS, and

wherein the K symbols are fixed to a specific value, configured by the base station, determined based on a timing advance between the terminal and the base station, or determined based on transmission/reception switching of the terminal.

11. The terminal of claim 9, wherein the controller:

determines whether a third region of a time-and-frequency resource based on the uplink subband configuration information and a fourth region in which transmission of the data is scheduled according to the scheduling information overlap in a time domain; and

determines a resource corresponding to a symbol of K symbols after a last symbol for a region configured to receive the DMRS in the fourth region or the third region, as a resource to receive the DMRS in case that the third region and the fourth region overlap in the time domain.

12. The terminal of claim 9, wherein the controller:

determines a region where reception of the data is impossible in case that a fifth region of a time-and-frequency resource based on the uplink subband configuration information and a sixth region where transmission of the data is scheduled according to the scheduling information overlap; and

receives the data from the base station based on the determined region where the reception of the data is impossible, and

wherein the region where the reception of the data is impossible includes some or all frequency resources after a last symbol of the fifth region, or some or all resources before a first symbol of the fifth region.

13. A base station in a wireless communication system supporting a subband non-overlapping full duplex (SBFD), the base station comprising:

a transceiver configured to transmit or receive a signal; and
a controller,
wherein the controller:

transmits, to a terminal, uplink subband configuration information including time-and-frequency resource information for configuring a part of a resource for downlink reception as a resource for uplink transmission;
transmits, to the terminal, scheduling information for data reception; and
transmits, to the terminal, a demodulation reference signal (DMRS) for the data, based on the uplink subband configuration information and the scheduling information.

14. The base station of claim 13, wherein the controller transmits, to the terminal, the DMRS in a resource corresponding to a symbol of K symbols after a last symbol for a first region in case that the first region of a time-and-frequency resource based on the uplink subband configuration information and a second region configured to receive the DMRS overlap, and

wherein the K symbols are fixed to a specific value, configured by the base station, determined based on a timing advance between the terminal and the base station, or determined based on transmission/reception switching of the terminal.

15. The base station of claim 13, wherein the controller transmits, to the terminal, the DMRS in a resource corresponding to a symbol of K symbols after a last symbol for a region configured to receive the DMRS in the fourth region or a third region in case that the third region of a time-and-frequency resource based on the uplink subband configuration information and a fourth region in which transmission of the data is scheduled according to the scheduling information overlap in a time domain.

16. The base station of claim 13, wherein the controller transmits, to the terminal, the data based on the region where the reception of the data is impossible in case that a fifth region of a time-and-frequency resource based on the uplink subband configuration information and a sixth region where transmission of the data is scheduled according to the scheduling information overlap, and

wherein the region where the reception of the data is impossible includes some or all frequency resources after a last symbol of the fifth region, or some or all resources before a first symbol of the fifth region.

FIG. 1

One subframe (110)

$N_{symb}^{subframe,\mu}$ OFDM symbols

1 subcarrier (103)

1 OFDM symbols (102)

$k = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

Time

$k = 0$

$\bar{l} = 0$

$\bar{l} = 14 \cdot 2^{\mu} - 1$

# FIG. 2

EP 4 601 231 A1

| 1 frame (200) | | | | | | | | | |
|---|---|---|---|---|---|---|---|---|---|

**μ=0 (204)**

| 1 subframe (201) | | | | | | | | | |
|---|---|---|---|---|---|---|---|---|---|
| 0 | 1 | 2 | 3 | 4 | 5 | 6 | 7 | 8 | 9 |

slot (202)

**μ=1 (205)**

| 0 | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|

slot (203)

FIG. 3

BWP#1
(301)

BWP#2
(302)

UE bandwidth
(300)

Frequency

# FIG. 4

Duration (404)

Frequecy resources (403)

UE bandwidth part (410)

Frequency

Time

Slot (420)

Control resource set#1 (401)

Control resource set#2 (402)

FIG. 5

# FIG. 6

Periodicity (605)

Rate matching resource (602)

Frequency-domain Allocation (604)

Time-domain Allocation (603)

PDSCH (601)

Frequency

Time

Slot #0          Slot #1          Slot #2

EP 4 601 231 A1

FIG. 7

| RA type 0<br>(7-00) | Bitmap (7-15) |
|---|---|

| RA type 1<br>(7-05) | Starting VRB (7-20) | Length (7-25) |
|---|---|---|

| Both RA type 0 & 1<br>(7-10) | 1 bit for RA type indication (7-30) | Max (payload for RA type 0, payload for RA type 1) (7-35) |
|---|---|---|

FIG. 8

FIG. 9

# FIG. 10

Single cell LTE/NR [S00]

**gNB**
- SDAP [S25]
- PDCP [S30]
- RLC [S35]
- MAC [S40]
- PHY [S45]

**UE**
- PHY [S50]
- MAC [S55]
- RLC [S60]
- PDCP [S65]
- SDAP [S70]

Carrier aggregation [S10]

**gNB**
- SDAP
- PDCP
- RLC
- MAC
- PHY ... PHY

**UE**
- PHY ... PHY
- MAC
- RLC
- PDCP
- SDAP

Dual connectivity [S20]

**MgNB**
- SDAP
- PDCP
- RLC
- MAC
- PHY

**SgNB**
- RLC
- MAC
- PHY

**UE**
- PHY
- MAC
- RLC
- PDCP
- SDAP

**SgNB**
- PHY
- MAC
- RLC

EP 4 601 231 A1

FIG. 11

TDD periodicity

| D | D | D | S | U | D | D | D | S | U | D | D | D | S | U | D | D | D | S | U |

1101                    (a) TDD only configuration

TDD periodicity

| D | D | D | S | U | D | D | D | S | U | D | D | D | S | U | D | D | D | S | U |

UL subband (1110)

1112    1111          (b) SBFD configuration 1

TDD periodicity

| D | D | D | S | U | D | D | D | S | U | D | D | D | S | U | D | D | D | S | U |

UL subband (1120)

1122    1121          (c) SBFD configuration 2

TDD periodicity

| D | D | D | S | U | D | D | D | S | U | D | D | D | S | U | D | D | D | S | U |

1132  1133  1134 1131    (d) SBFD configuration 3

FIG. 12

slot

UL subband
(1210)

Freq.

Time

(a) UL subband in DL/F symbols

slot

UL subband
(1210)

Freq.

Time

DMRS
symbol
(1270)

PDSCH
(1250)

(b) PDSCH scheduling
overlapping with UL subband

FIG. 13

(a) DL subband in UL/F symbols

(b) PUSCH scheduling
overlapping with DL subband

FIG. 14

FIG. 15

FIG. 16

FIG. 17

FIG. 18

FIG. 19

FIG. 20

FIG. 21

slot

UL subband
[2110]

PDSCH [2120]

Freq.

Time

DMRS symbol [2121]

(a) PDSCH scheduling overlapping with
UL subband in time domain

slot

DL subband
[2130]

PDSCH [2140]

Freq.

Time

DMRS symbol [2141]

(b) PUSCH scheduling overlapping with
DL subband in time domain

FIG. 22

FIG. 23

FIG. 24

2405

2400
receiver

processor

2410
transmitter

## INTERNATIONAL SEARCH REPORT

| International application No. |
| --- |
| **PCT/KR2023/016957** |

| A. | CLASSIFICATION OF SUBJECT MATTER |
| --- | --- |

**H04L 5/00**(2006.01)i; **H04L 5/14**(2006.01)i; **H04W 72/23**(2023.01)i

According to International Patent Classification (IPC) or to both national classification and IPC

| B. | FIELDS SEARCHED |
| --- | --- |

Minimum documentation searched (classification system followed by classification symbols)

H04L 5/00(2006.01); H04B 7/02(2006.01); H04B 7/04(2006.01); H04B 7/08(2006.01); H04J 11/00(2006.01); H04L 1/00(2006.01); H04W 72/04(2009.01); H04W 72/12(2009.01); H04W 76/19(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SBFD(subband non-overlapping full duplex), 업링크 서브밴드(UL subband) 설정 정보(configuration information), 스케줄링 정보(scheduling information), DMRS(demodulation reference signal)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2022-0287062 A1 (QUALCOMM INCORPORATED) 08 September 2022 (2022-09-08)<br>See paragraphs [0124] and [0157]-[0161]; claims 21 and 33; and figures 7 and 9. | 1-16 |
| Y | US 2021-0409097 A1 (QUALCOMM INCORPORATED) 30 December 2021 (2021-12-30)<br>See paragraph [0080]; and claim 5. | 1-16 |
| A | WO 2010-128831 A2 (LG ELECTRONICS INC.) 11 November 2010 (2010-11-11)<br>See claims 5-8. | 1-16 |
| A | KR 10-2016-0099095 A (INTERDIGITAL PATENT HOLDINGS, INC.) 19 August 2016 (2016-08-19)<br>See paragraphs [0682]-[0687]; and figure 25. | 1-16 |
| A | WO 2016-117968 A1 (LG ELECTRONICS INC.) 28 July 2016 (2016-07-28)<br>See claims 1-12. | 1-16 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 January 2024** | **25 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/016957**

| Patent document cited in search report | | | Publication date (day/month/year) | Patent family member(s) | | | Publication date (day/month/year) |
|---|---|---|---|---|---|---|---|
| US | 2022-0287062 | A1 | 08 September 2022 | CN | 114270984 | A | 01 April 2022 |
| | | | | EP | 3994931 | A1 | 11 May 2022 |
| | | | | EP | 3994931 | A4 | 29 March 2023 |
| | | | | WO | 2021-000312 | A1 | 07 January 2021 |
| US | 2021-0409097 | A1 | 30 December 2021 | CN | 115917986 | A | 04 April 2023 |
| | | | | EP | 4173165 | A1 | 03 May 2023 |
| | | | | KR | 10-2023-0027026 | A | 27 February 2023 |
| | | | | US | 11757519 | B2 | 12 September 2023 |
| | | | | WO | 2021-263161 | A1 | 30 December 2021 |
| WO | 2010-128831 | A2 | 11 November 2010 | US | 2012-0082119 | A1 | 05 April 2012 |
| | | | | WO | 2010-128831 | A3 | 24 February 2011 |
| KR | 10-2016-0099095 | A | 19 August 2016 | CN | 106063178 | A | 26 October 2016 |
| | | | | CN | 106063178 | B | 18 October 2019 |
| | | | | EP | 3085002 | A1 | 26 October 2016 |
| | | | | EP | 3879743 | A1 | 15 September 2021 |
| | | | | JP | 2017-504259 | A | 02 February 2017 |
| | | | | JP | 6721506 | B2 | 15 July 2020 |
| | | | | KR | 10-2019540 | B1 | 06 September 2019 |
| | | | | US | 10243720 | B2 | 26 March 2019 |
| | | | | US | 11743020 | B2 | 29 August 2023 |
| | | | | US | 2016-0330011 | A1 | 10 November 2016 |
| | | | | US | 2019-0158263 | A1 | 23 May 2019 |
| | | | | US | 2021-0091918 | A1 | 25 March 2021 |
| | | | | US | 2023-0353336 | A1 | 02 November 2023 |
| | | | | WO | 2015-094914 | A1 | 25 June 2015 |
| WO | 2016-117968 | A1 | 28 July 2016 | US | 10243639 | B2 | 26 March 2019 |
| | | | | US | 2017-0373735 | A1 | 28 December 2017 |

Form PCT/ISA/210 (patent family annex) (July 2022)